# EUROPÄISCHE PATENTSCHRIFT

(11) **EP 3 087 227 B1**
(45) Veröffentlichungstag und Bekanntmachung des Hinweises auf die Patenterteilung: **15.04.2020**
(21) Anmeldenummer: 14828160.3
(22) Anmeldetag: 23.12.2014
(51) Int. Cl.: E04B 1/348, E04H 3/08, A61G 10/00

(54) **GEBÄUDE, INSBESONDERE KRANKENHAUS**
BUILDING, IN PARTICULAR A HOSPITAL
BÂTIMENT, NOTAMMENT HÔPITAL

(30) Priorität: 23.12.2013 DE 102013114816
(43) Veröffentlichungstag der Anmeldung: 02.11.2016
(73) Patentinhaber: Geiger, Gunter Grant, New York, NY 10014 (US)
(72) Erfinder: GEIGER, Gunter, verstorben (US)
(74) Vertreter: Blumbach · Zinngrebe Patentanwälte PartG mbB
(86) Internationale Anmeldenummer: PCT/EP2014/079181
(87) Internationale Veröffentlichungsnummer: WO 2015/097226

(56) Entgegenhaltungen:
- EP-A2- 0 118 957
- WO-A2-2006/071870
- CA-A1- 998 216
- DE-A1- 3 036 468
- NL-A- 7 404 345
- US-A- 3 623 296
- US-A- 3 733 763
- US-A- 4 766 708
- US-A- 5 265 384
- US-A1- 2007 144 079

## Beschreibung

### Gebiet der Erfindung

Die Erfindung betrifft ein Gebäude, insbesondere ausgebildet als Krankenhaus mit einer Mehrzahl von Patientenzimmern. Insbesondere betrifft die Erfindung ein Krankenhauskonzept für Krankenhäuser mit mehr als 100, vorzugsweise mehr als 200 Betten sowie einer Mehrzahl von Behandlungsstationen.

### Hintergrund der Erfindung

Die Konstruktion des Gebäudes unterscheidet sich bei bekannten Krankenhäusern nur wenig von der Konstruktion von Wohn- und Bürogebäuden.

Größere Krankenhäuser bzw. Kliniken bestehen vielfach aus einem Gebäude, welches eine Mehrzahl an Etagen aufweist. Es gibt in der Regel zentral angeordnete Treppenhäuser und Fahrstuhlschächte, von denen Flure abgehen, die zu den Patientenzimmern sowie zu den Behandlungsstationen führen.

Dieses Grundkonzept hat zur Folge, dass die Patientenversorgung in bekannten Krankenhäusern insofern recht aufwendig ist, als dass das Krankenpersonal große Wege zurücklegen muss, um von einem Zimmer ins andere Zimmer zu gelangen. Neben der Betreuung der Patienten ist auch eine Versorgung mit Medikamenten, Nahrungsmitteln, frischer Wäsche etc. erforderlich. Die Wege, um die für diese Versorgung benötigten Gegenstände zu verbringen, überschneiden sich mit den Wegen, über die Patienten zu einer Behandlungsstation oder nach draußen gelangen. Auch hierdurch wird erheblicher Aufwand verursacht. So werden Nahrungsmittel und Wäsche in der Regel auf händich bewegten Wagen transportiert, was anstrengend und teils auch gefährlich ist.

Desweiteren hat die großflächige Überschneidung von Wegen, entlang der Versorgungsgegenstände als auch Patienten gebracht werden, den Nachteil, dass die Gefahr der Verbreitung ansteckender Keime und Viren besteht, etwa dadurch, dass angeliefertes Essen oder angelieferte Wäsche während des Transportes durch das Krankenhaus kontaminiert wird, beispielsweise während diese an einem kranken Patienten, der durch den selben Flur transportiert wird, vorbeigeschoben wird.

Die derzeit betriebenen Krankenhäuser und Kliniken müssen aufgrund des hohen Aufwands sowie aufgrund des Kostendrucks im Gesundheitssystem ihre Versorgungsleistungen immer weiter einschränken, um den Betrieb kostendeckend aufrechterhalten zu können.

US 2007/144079 A1 und DE 30 36 468 A1 offenbaren Gebäude, die als Krankenhäuser ausgebildet sind und einzelne Module aufweisen, die in einer Skelettstruktur eingeschoben sind.

### Aufgabe der Erfindung

Der Erfindung liegt demgegenüber die Aufgabe zugrunde, ein Gebäude, insbesondere ausgebildet als Krankenhaus bereitzustellen, bei welchem gegenüber vorstehend beschriebenen Stand der Technik die Konstruktion vereinfacht wird, und insbesondere Versorgung der Patienten wesentlich verbessert werden kann.

Es soll weiter die Patientenversorgung sowie das Verbringen der Patienten auf die Behandlungsstationen effizienter und einfacher werden und es soll gemäß der Erfindung die Gefahr des Ausbreitens von Krankheitskeimen reduziert werden.

### Zusammenfassung der Erfindung

Die Aufgabe der Erfindung wird bereits durch ein Gebäude nach Anspruch 1 gelöst.

Bevorzugte Ausführungsformen und Weiterbildungen der Erfindung sind dem Gegenstand der jeweiligen Unteransprüche zu entnehmen.

Die Erfindung betrifft zum einen ein Gebäude, welches insbesondere als Krankenhaus ausgebildet ist. Denkbar ist eine Verwendung der Erfindung aber auch für andere Arten von Gebäuden, wie insbesondere für Hotelgebäude.

Gemäß der Erfindung umfasst das Gebäude eine Skelettstruktur aus mehreren Etagen. Bei der Skelettstruktur handelt es sich insbesondere um ein Stahlgerüst aus T- oder Doppel-T-Trägern, welche entweder verschweißt oder über Schraub- oder Nietverbindungen zusammengefügt sind.

Vorzugsweise ist die Skelettstruktur aus einer begrenzten Anzahl von vorgefertigten Trägern aufgebaut. Insbesondere hat der Erfinder herausgefunden, dass sich mit einer begrenzten Anzahl verschiedener Träger, insbesondere weniger als 10, vorzugsweise weniger als 7 verschiedenen Trägerarten auch größere komplexe Gebäudestrukturen realisieren lassen.

In die Skelettstruktur werden von außen einzelne Module mit jeweils einem oder mehreren Zimmern eingeschoben.

Die Erfindung ermöglicht damit die Bereitstellung standardisierter vorgefertigter Module, welche ggf. fertig vormontiert angeliefert werden und welche sodann nur noch in die Skelettstruktur geschoben werden müssen.

Auf diese Weise lassen sich auch größere Gebäude preiswert und äußerst schnell errichten.

Bei einer bevorzugten Ausführungsform der Erfindung weist die Skelettstruktur einen im Wesentlichen runden Querschnitt auf. Die Module sind dabei als Ring um einen Kernbereich herum angeordnet.

Es versteht sich, dass im Sinne der Erfindung unter einem kreisförmigen Querschnitt auch eine Annäherung an einen derartigen kreisförmigen Querschnitt etwa durch ein Polygon mit zumindest vier Ecken verstanden wird.

Die einzelnen Module haben dabei vorzugsweise Seitenwände, welche nicht parallel zueinander angeordnet sind. Mithin sind diese Module keilförmig gestaltet und können so einen Ring bilden.

Gemäß der Erfindung umfasst die Skelettstruktur Führungsschienen, auf welche die Module mit einer korrespondierenden Nut aufgeschoben werden.

Durch eine derartige Führungsschiene wird ein einfaches passgenaues Einsetzen der Module ermöglicht.

Vorzugsweise handelt es sich lediglich um eine einzige Führungsschiene, welche in etwa mittig unter dem Modul angeordnet ist.

So ist ein Ausrichten der Führungsschiene beim Aufbau der Skelettstruktur besonders einfach möglich.

Die Module haben ihrerseits vorzugsweise randseitig Höhenverstellelemente, welche im eingeschobenen Zustand auf Trägern der Skelettstruktur aufliegen.

Beim Einschieben des Moduls wird durch die Führungsschiene ein passgenaues Ausrichten des Moduls in Bezug auf die Führungsschiene ermöglicht.

Randseitig ist zwischen der Skelettstruktur und dem jeweiligen Modul Spiel vorgesehen. Über derartige Spalte können Formtoleranzen des Moduls und/oder der Skelettstruktur ausgeglichen werden.

Das Modul muss sodann nur noch über die Höhenverstellelemente waagerecht ausgerichtet werden, was aufgrund des randseitigen vorhandenen Spalts ebenfalls möglich ist.

Der verbleibende Spalt kann durch vorgefertigte Abdeckelemente, welche insbesondere Teil der späteren Fassade sein können, leicht verdeckt und verschlossen werden.

Vorzugsweise ist das jeweilige Modul im eingeschobenen Zustand auf Vibrationsdämpfern gelagert.

Derartige Vibrationsdämpfer können insbesondere auch Teil des Höhenverstellelementes sein.

So ist es beispielsweise denkbar, ein Höhenverstellelement mit einer Gewindespindel bereitzustellen, welche mit einem Elastomerelement verbunden ist.

An den Aufnahmepunkten wird nunmehr neben einer Höhenverstellung gleichzeitig auch eine Vibrationsdämpfung erreicht.

Eine derartige Vibrationsdämpfung dient vor allem einem optimalen Schallschutz zwischen den einzelnen Modulen, erhöht aber auch die Erdbebensicherheit des Gebäudes.

Die Erfindung ermöglicht auch bei Verwendung relativ dünnwandiger Module einen überraschend guten Schallschutz.

Vorzugsweise ist zwischen dem Ring aus Modulen und dem Kernbereich ein Gang angeordnet.

In diesen Gang kann beispielsweise ein Lauf- oder Fahrsteig angeordnet sein.

In dem Kernbereich befinden sich, wie später noch im Detail ausgeführt wird, bei der Ausgestaltung als Krankenhaus die Behandlungszimmer.

Weiter befindet sich im Kernbereich zumindest ein Fahrstuhl oder ein Treppenhaus.

Die Ausgestaltung eines ringförmigen Bereiches mit den einzelnen Zimmern bestehend aus Modulen in Verbindung mit einem zentralen Kernbereich hat zur Folge, dass die zurückzulegenden Wege bei dem erfindungsgemäßen Gebäudekonzept wesentlich kürzer sind, als es bei konventionellen Gebäuden der Fall ist.

Insbesondere bei größeren Gebäuden ist bei einer Weiterbildung der Erfindung in der Skelettstruktur zumindest eine Feuerschutzdecke vorgesehen.

Es ist insbesondere vorgesehen, dass die aus Stahl bestehende Skelettstruktur zwischen einzelnen Etagen Zwischendecken aus Beton umfasst.

Derartige Betondecken, die je nach nationalen Brandschutzvorschriften nur nach einer bestimmten Anzahl von übereinander liegenden Etagen eingezogen sind, verhindern die Ausbreitung eines Feuers von Etage zu Etage.

Vorzugsweise wird ansonsten auf Betondecken innerhalb der Skelettstruktur verzichtet, was die Herstellungskosten des Gebäudes reduziert und gleichzeitig die Struktur unempfindlicher gegen Erdbeben macht.

Das erfindungsgemäße Gebäude ist insbesondere so ausgebildet, dass insbesondere im Fall der Verwendung als Krankenhaus die Wege für Versorgung, etwa mit Lebensmitteln und Wäsche, sowie Entsorgung von den Wegen, über die Patienten oder Gäste das Gebäude betreten, getrennt sind. Hierzu ist insbesondere ein separater Versorgungsturm denkbar, welcher außerhalb der Skelettstruktur angeordnet ist und mit dem restlichen Gebäude über Gänge verbunden ist.

Die Treppenhäuser oder Fahrstühle für Gäste oder Patienten befinden sich dagegen vorzugsweise im Kernbereich, also innerhalb des Rings aus nebeneinander angeordneten Modulen.

Durch die Erfindung lassen sich insbesondere auch größere Gebäudekomplexe umfassend mehrere erfindungsgemäße Gebäude bereitstellen.

Insbesondere ist ein Gebäudekomplex vorgesehen, welcher eine Mehrzahl, also zumindest zwei, vorzugsweise zumindest drei, erfindungsgemäße Gebäude umfasst, welche durch zumindest eine gemeinsame untere Etage miteinander verbunden sind.

Es ist insbesondere vorgesehen, in dieser größeren unteren Etage einen Empfangsbereich oder Parkhäuser vorzusehen, während die Aufenthaltszimmer über die einzelnen Gebäude verteilt sind, die sich von dieser unteren Etage ausgehend nach oben erstrecken.

Die Erfindung betrifft des Weiteren ein Krankenhaus, bei welchem es einen Patientenbereich gibt, in welchem sich Patienten, Besucher sowie das medizinische Personal des Krankenhauses bewegen, sowie einen Versorgungsbereich.

Gemäß der Erfindung sind Patientenbereich sowie Versorgungsbereich über voneinander getrennte Wege zugänglich und über separate, voneinander getrennte Eingänge betretbar.

Die Versorgung mit Medikamenten, Nahrungsmitteln sowie die Entsorgung erfolgt mithin über Wege, welche von den Wegen, auf denen sich Patienten und Krankenhauspersonal bewegen, getrennt sind.

So wird beispielsweise das Übertreten von Keimen von kranken Patienten auf andere Gegenstände vermieden. Weiter erfolgt vorzugsweise die Belieferung des Krankenhauses über eine desinfizierende Schleuse, beispielsweise eine Schleuse, die UV-Lampen umfasst. So wird auch die Gefahr, dass Keime, welche an gelieferten Gegenständen anhaften, großflächig das Krankenhaus kontaminieren, weitgehend verhindert.

Der Versorgungsbereich befindet sich vorzugsweise baulich getrennt, etwa in einem angrenzend angeordneten Turm.

Die Eingänge für Versorgungs- und Patientenbereich befinden sich vorzugsweise auf gegenüberliegenden Seiten des Gebäudes.

Bei einer Weiterbildung der Erfindung weist das Modul angrenzend zum Fußboden abgerundete Zimmerecken auf.

Eine derartige Ausgestaltung ermöglicht eine vereinfachte Reinigung, insbesondere mit einem Reinigungsroboter.

Bei herkömmlichen Reinigungsrobotern zum feuchten Reinigen des Bodens ist es in der Regel nicht möglich, dass auch alle Ecken des Zimmers gereinigt werden.

Daher sind vorzugsweise abgerundete Ecken vorgesehen, in welche eine Bürste bzw. ein Schwamm oder Wischmopp des Roboters hineinkommt. Auf manuelles Nachwischen kann so ganz oder teilweise verzichtet werden.

Die abgerundeten Ecken können insbesondere mittels Metallprofilen bereitgestellt werden. Denkbar ist auch, dass derartige Metallprofile Teil der Tragstruktur des jeweiligen Moduls sind.

Die Metallprofile können insbesondere dazu dienen, um den Boden des Moduls mit den Wänden zu verbinden.

Bei einer bevorzugten Ausführungsform der Module weist jedes Modul eine autarke Klimatisierung auf.

Es ist insbesondere vorgesehen, dass jedes Modul eine eigene Frischluftversorgung aufweist und es ist des Weiteren insbesondere vorgesehen, dass über die Klimatisierung das Modul gegenüber der Umgebung sowohl auf Unterdruck als auch auf Überdruck eingestellt werden kann.

Durch die autarke Klimatisierung wird die Gefahr der Verbreitung von Keimen von einem Modul zum anderen reduziert.

Sofern die Klimatisierung derart ausgebildet ist, dass Unterdruck und Überdruck in dem jeweiligen Modul erzeugt werden kann, ist es möglich, abhängig vom jeweiligen Verwendungszweck dafür zu sorgen, dass entweder keine Luft vom Modul aus in das Gebäude tritt oder umgekehrt.

Im Fall der Verwendung des Moduls als Isolierstation kann dieses unter Unterdruck gesetzt werden, wodurch weitgehend verhindert wird, dass Luft und damit Keime beim Öffnen einer Tür des Moduls in das Gebäude treten können. Im umgekehrten Fall, etwa zur Unterbringung eines Patienten mit einer Autoimmunerkrankung, welcher keinesfalls mit Keimen in Kontakt treten sollte, wird das Modul unter Überdruck gesetzt, so dass weitgehend verhindert wird, dass Luft vom Gebäude, etwa vom Gang des Gebäudes, in das Modul eintritt, wenn eine Tür geöffnet wird.

Das Modul hat vorzugsweise eine Nasszelle und einen feuerfesten Boden.

Es ist insbesondere auch vorgesehen, dass jedes Modul mit Anschlüssen für Wasser, Strom und Abwasser versehen ist, sonst aber sämtliche Technik individuell in jedem Modul eingebaut ist, so dass dieses autark betrieben werden kann.

Die hierfür erforderlichen Versorgungsleitung verlaufen vorzugsweise vertikal durch das Gebäude. Die Anschlüsse am Modul sind vorzugsweise durch eine Öffnung, Tür oder Klappe zugänglich.

Weiter können die Module eine Sprinkleranlage umfassen.

Vorzugsweise ist an der langen Stirnfläche eines keilförmig ausgebildeten Moduls ein Fenster und an der kurzen Stirnfläche zumindest eine Tür angeordnet.

Türen und technische Einrichtungen des Moduls, wie Lichtschalter, Toiletten und Wasserspülung, sind vorzugsweise berührungslos betätigbar ausgebildet.

Bei einer weiteren Ausführungsform umfasst das Modul einen Eingangsbereich mit einer Schleuse, in welcher das Krankenpersonal beispielsweise Schutzkleidung anlegen kann.

Die Schleuse befindet sich gegenüber einem Aufenthaltsraum des Patienten unter Überdruck.

Die Erfindung betrifft weiter ein Krankenhaus, welches eine Mehrzahl von Etagen mit auf den Etagen angeordneten Patientenzimmern umfasst.

Das Krankenhaus umfasst einen zentral positionierten Kernbereich mit zumindest einer Behandlungsstation.

Der Kernbereich kann beispielsweise modular ausgebildet sein.

Vom Grundkonzept her werden die Behandlungen im Kernbereich durchgeführt.

Vorzugsweise sind die verschiedenen Behandlungsstationen des Krankenhauses auf die Etagen des Kernbereiches verteilt angeordnet.

Der Kernbereich kann insbesondere einen runden oder polygonen, vorzugsweise achteckigen, Querschnitt aufweisen, so dass sich die Patientenzimmer ringförmig um den Kernbereich erstrecken können.

Weiter erstreckt sich um den Kernbereich, vorzugsweise in einem Gang zwischen dem Kernbereich und den Patientenzimmern ein ringförmiger Fahrsteig.

Unter einem Fahrsteig wird eine Transportvorrichtung verstanden, mittels der Patienten und/oder Gegenstände um den Kernbereich herum transportiert werden können. Es kann sich dabei insbesondere um ein ringförmiges Förderband, um einen kreisförmigen Teller, um gliederartig hintereinander angeordnete Gelenke etc. handeln. Auch ist denkbar, eine Mehrzahl von geraden Abschnitten zu einem Polygon zu formen.

Bereits aufgrund der Konzentration der Behandlung in einem mittig angeordneten Behandlungsbereich sind die Wege kürzer als in herkömmlichen Krankenhäusern.

Mit dem Fahrsteig wird darüber hinaus noch eine Transporteinrichtung geschaffen, welche die Beförderung von Patienten und Waren wesentlich erleichtert.

Vorzugsweise ist auf zumindest einer Seite, besonders bevorzugt auf beiden Seiten des Fahrsteiges, ein Gehsteig angeordnet.

Der Fahrsteig kann verlassen werden, indem der Benutzer auf den Gehsteig überwechselt. Sodann können die Patientenzimmer oder der Kernbereich, in welchem die Behandlungsstation befindet, über Türen betreten werden.

Die Türen sind vorzugsweise berührungslos öffnend ausgebildet, was ebenfalls die Gefahr der Übertragung von Krankheitserregern wesentlich reduziert.

Es ist insbesondere vorgesehen, Patienten und Krankenhauspersonal mit einer Code-Karte oder einem Transponder auszustatten, der einen Datensatz umfasst, über den festgelegt ist, wann die betreffende Person Zugang zu welchen Zimmern oder Stationen hat. So hat beispielsweise ein Patient Zugang zu seinem Patientenzimmer und Zugang zu der Behandlungsstation zu einer vorgegebenen Behandlungszeit. Auch für Servicepersonal, Ärzte und Krankenschwestern können die Zugangsbereiche derart geregelt werden, dass nicht die Gefahr besteht, dass eine unbefugte Person in einen Bereich eindringt, welche ihr nicht zugeordnet ist.

Vorzugsweise hat auch das Krankenhaus selbst ein Hauptgebäude, welches einen runden oder polygonen, insbesondere einen hexagonalen Querschnitt aufweist.

Es ist also vorgesehen, dass das Hauptgebäude einen Kernbereich aufweist, in welchem die Behandlungsstationen und vorzugsweise auch die Aufzüge zum Transport zumindest der Patienten angeordnet sind.

In einem ringförmigen Bereich darum erstrecken sich die Patientenzimmer.

Neben kurzen Wegen bietet dieses Konzept noch eine optimale Raumausnutzung.

Zur Versorgung der Patientenzimmer sind bei einer Weiterbildung der Erfindung Durchreichen vorgesehen, durch welche Essen und/oder Medikamente und/oder frische Wäsche in die Zimmer geschoben werden kann, ohne diese betreten zu müssen. Dies erleichtert ebenfalls die Bereitstellung von Serviceleistungen.

Die Erfindung betrifft weiter ein Krankenhaus, bei dem die Etagen über Fahrstühle miteinander verbunden sind.

In einem Kernbereich und/oder Patientenbereich ist zumindest ein erster Fahrstuhl angeordnet und es ist ein zweiter Fahrstuhl in einem Versorgungsbereich vorgesehen, welcher außerhalb des Patientenbereiches angeordnet ist und welcher baulich mit den Etagen verbunden ist.

Insbesondere ist vorgesehen, dass es neben dem Hauptgebäude einen Versorgungsturm gibt, der eine beliebige Form aufweisen kann, in welchem Waren angeliefert und abtransportiert werden.

Die Zu- und Abwege zu diesem Versorgungsbereich überschneiden sich nicht mit den Wegen, über die die Patienten zu den Stationen geführt werden.

Weiter können die Wege im Versorgungsbereich, wie es bei einer bevorzugten Ausführungsform der Erfindung vorgesehen ist, jeweils nur in einer Richtung betrieben werden, d.h. Medikamente, Wäsche und sonstige Waren zur Versorgung des Krankenhauses werden über den Versorgungsturm in einer Richtung in das Krankenhaus eingebracht und werden, vorzugsweise baulich durch Wände getrennt, über einen anderen Weg wieder aus dem Krankenhaus herausgebracht.

Zum Transport von Lebensmitteln, Wäsche und Medikamenten sind insbesondere automatisierte Fahrzeuge vorgesehen, welche anhand fester Wege im Versorgungsbereich in den Kernbereich fahren, so dass dort die Waren entnommen werden können und auf sehr kurzem Weg zu den Patienten verbracht werden können.

Die Erfindung betrifft desweiteren ein Krankenhaus, bei welchem die Patientenzimmer modular ausgebildet sind.

Es sind mithin Patientenmodule vorgesehen, welche zumindest ein Bett sowie sanitäre Einrichtungen umfassen. Weiter ist ein Kernbereich mit einer Behandlungsstation vorgesehen, um den die Module herum angeordnet sind.

Die Module können im wesentlichen gleichartig und standardisiert aufgebaut sein. Denkbar ist auch, den Kernbereich mit den Behandlungsstationen modular aufzubauen.

Unter einem modularen Aufbau wird verstanden, dass die Patientenmodule leicht an- und abgebaut werden können. Diese sind vorzugsweise um den Kernbereich herum stapelbar.

Vorzugsweise umfassen die Patientenmodule zentrale Anschlüsse für Elektrizität, Warmwasser und/oder Abwasser.

Die standardisierten Module können so auf einfache Weise aufgebaut und angeschlossen werden. Weiter sind nur kurze Leitungslängen erforderlich.

Es ist insbesondere denkbar, in einem Serviceschacht im Kernbereich zentrale Leitungen bereitzustellen, an denen die gestapelten Module angeschlossen werden können.

So lässt sich ein vorgefertigtes Krankenhaus innerhalb kurzer Zeit aufbauen.

Bei einer Weiterbildung der Erfindung umfasst das Hauptgebäude ein Solarmodul, welches um den kreis- oder polygonförmigen Gebäudeabschnitt drehbar ist.

Dieses Solarmodul kann entsprechend der Sonne ausgerichtet werden und teilweise die Versorgung des Krankenhauses mit Elektrizität sicherstellen.

Weiter dient das Solarmodul bei starker Sonneneinstrahlung gleichzeitig zur Abschattung der betroffenen Patientenzimmer.

Die wesentlichsten Merkmale der Erfindung lassen sich mithin wie folgt zusammenfassen:
Das Gebäude ist modular aufgebaut und die Patientenzimmer erstrecken sich um einen inneren Kernbereich. Durch den funktionellen inneren Kernbereich, in welchem insbesondere technische Geräte zur Behandlung der Patienten etc. angeordnet sind, wird eine sowohl in technischer als auch in ökonomischer Hinsicht verbesserte Funktion angeboten.

Ein sich drehender Fahrsteig in einem zum Kernbereich angrenzenden Gang mit Gehsteigen an der Seite stellt sicher, dass Ärzte, Krankenschwestern und sonstiges Personal jeden Patientenraum schnell erreichen. Laufen wird auf den ohnehin kurzen Distanzen weitgehend vermieden.

Liefer- und Abholservices (insbesondere Medikamente, Essen, Getränke, Raumservice, Entsorgung) sind um den Kernbereich herum gebündelt. Aufgrund des neuen Gebäudekonzeptes ist der Bereich, in dem Instandhaltung und Reparatur stattfindet, wesentlich kleiner, wodurch eine Kostenreduktion von 40 % erreicht werden kann. Die Versorgungs- und Entsorgungsserviceleistungen finden überwiegend auf Wegen statt, die vom Patienten- und

Ärztebereich getrennt sind. Überschneidungen gibt es vorzugsweise lediglich in dem sich um den Kernbereich herum erstreckenden Gang.

Durch die Trennung wird die Gefahr der Verbreitung von Krankheitskeimen reduziert. Weiter sind vorzugsweise die Schalter des Krankenhauses, insbesondere von Türen, Fahrstühlen, Badinstallationen und Rufschaltern für Serviceleistungen, berührungslos bedienbar ausgebildet. Dies betrifft insbesondere Schalter von Waschwasser, Toiletten, Licht, Türen etc..

Ein sich vorzugsweise drehendes Solarsegel ist direkt mit dem Gebäude verbunden und dreht sich selbst in Richtung der Sonne, um eine maximale Energieausbeute zu erreichen.

Die Patientenräume sind modular ausgebildet und können beispielsweise in Versionen mit 5 Betten und bei entsprechender Unterteilung mit 2 Betten oder 1 Bett bereitgestellt werden. Das Grundmodul bestehend aus Boden und Wänden ist dabei von den Abmessungen gleich, so dass die Module beliebig miteinander kombiniert werden können.

Weiter wird eine steckbare Verbindung von Strom, Wasser und Belüftung bereitgestellt, die bereits in den Modulen bei Anlieferung vorhanden ist. Bei Errichtung des Krankenhauses müssen diese Anschlüsse nur zusammengesteckt werden.

Auch für die Abwasserleitungen ist eine Steckverbindung vorgesehen. Insbesondere sind wasserlose Toiletten und Urinale vorgesehen, welche über eine Unterdruckleitung entleert werden.

Das Wasser von Duschen und Waschbecken kann aufbereitet werden, beispielsweise um für die Toilettenspülung oder für die Vorwäsche von Geschirr und Textilien verwendet zu werden.

Die Module weisen Anschlüsse auf und sind vollständig vorgefertigt, so dass neben dem Anschließen über Steckverbindungen keine weiteren Arbeiten erforderlich sind.

Um eine gewünschte Größe insbesondere von bis zu 1.000 Betten zu erreichen, können mehrere Hauptgebäude, welche identisch ausgebildet sind, nebeneinander errichtet werden, wodurch die Baukosten um 40 % reduziert werden. Jedes Stockwerk ist stapelbar. Das Hauptgebäude ist insbesondere rund, hexagonal oder oval ausgestaltet.

Mit demselben System und denselben Komponenten können Krankenhäuser mit einer Bettenanzahl von 100 bis 1.000 Betten errichtet werden.

Es gibt einen zentralen Servicebereich für die Instandhaltung, Entsorgung und Serviceleistungen, wodurch ebenfalls die Gefahr der Verbreitung von Keimen reduziert wird.

Die Krankenstationen können direkt über den Fahrsteig erreicht und betreten werden. Die Effektivität des Personals kann aufgrund der geringeren Wege um 30 % verbessert werden.

Fahrstuhlschächte mit Stromgeneratoren sorgen für eine zusätzliche Energieausbeute. Vorzugsweise werden die Fahrstühle im Linearmotoren angetrieben und verfügen über keine Kabel.

Vorzugsweise ist jedes Stockwerk mit einer anderen Funktionalität ausgebildet, insbesondere Rezeption, An- und Abreise, Bücherei, Besprechungsräumen, einer Cafeteria für Patienten und Gäste, Ruheräumen sowie Patientenräumen.

Die Stockwerke können je nach gewünschter Funktion und gewünschter medizinischer Leistung gestapelt werden inklusive unterschiedlicher Software und Hardware für jedes Stockwerk.

Die Anschlüsse für alle Arten von Service sind im Kernbereich angeordnet.

Weiter verfügt das Krankenhaus vorzugsweise über automatische Ver- und Entsorgungseinrichtungen, insbesondere über selbst fahrende Fahrzeuge zur Versorgung mit Medikamenten, Essen, Getränken sowie zur Entsorgung von Müll.

Die Versorgungscontainer können beispielsweise auch automatisch gewaschen und gesäubert werden inklusive einer Bestrahlung mittels UV-Strahlung zur Tötung von Keimen.

Das Gebäude ermöglicht auch eine Reinigung durch Roboter, was ebenfalls die Effizienz steigert.

Auch die Hardware für technische Geräte ist vorzugsweise mit berührungslosen Schaltern versehen. Denkbar sind austauschbare, waschbare Masken. Die einzelnen Stockwerke können mit drahtlosen Datenverbindungen versehen werden. Zur Kontrolle von Inventar sowie zur Verteilung von Zugangsberechtigungen können RFID-Chips verwendet werden.

Nicht Teil der Erfindung ist die Verwendung selbsttätig fahrender Fahrzeuge in einem Gebäude. Danach ist ein selbsttätig fahrendes Fahrzeug vorgesehen, also ein Fahrzeug, welches Sensoren umfasst, über die es selbständig durch das Gebäude fährt. Es versteht sich, dass aber auch denkbar ist, das Fahrzeug zumindest teilweise manuell zu schieben.

Das Fahrzeug umfasst zumindest eine Kammer, welche mit einem nach oben aufschiebbaren Rollladen verschlossen ist und welche Einschübe, vorzugsweise für Lebensmittel, aufweist.

Derartige Fahrzeuge sind insbesondere zur Essensverteilung in einem Krankenhaus vorgesehen.

Dabei kann das zu verteilende Essen in den Einschüben angeordnet sein und die Rollläden werden nach und nach bei Verteilung des Essens geöffnet. Hierdurch ist sichergestellt, dass der Rollladen jeweils nur insoweit geöffnet ist, inwieweit das Essen bereits verteilt ist.

Es wird so eine unbeabsichtigte Erwärmung oder Abkühlung des Essens vermieden. Weiter wird so die Hygiene verbessert.

Das Fahrzeug umfasst vorzugsweise zumindest zwei benachbarte Kammern, welche wärmeisoliert sind.

Insbesondere ist auch vorgesehen, das Fahrzeug mit kühl-oder heizbaren Kammern zu versehen.

In vorteilhafter Ausgestaltung umfasst das Fahrzeug ein Klimagerät. Dabei kann insbesondere der Wärmetauscher einer Kaltseite des Klimagerätes mit einer Kühlkammer und der Wärmetauscher einer Heißseite des Klimagerätes mit einer Wärmekammer verbunden sein. Auf diese Weise lässt sich auf besonders energieeffiziente Weise ein Fahrzeug bereitstellen, welches sowohl eine Kühlkammer, etwa zur Aufbewahrung von Kaltgetränken und Obst, als auch eine Wärmekammer, etwa zur Verteilung von warmen Mahlzeiten, umfasst.

### Beschreibung der Zeichnungen

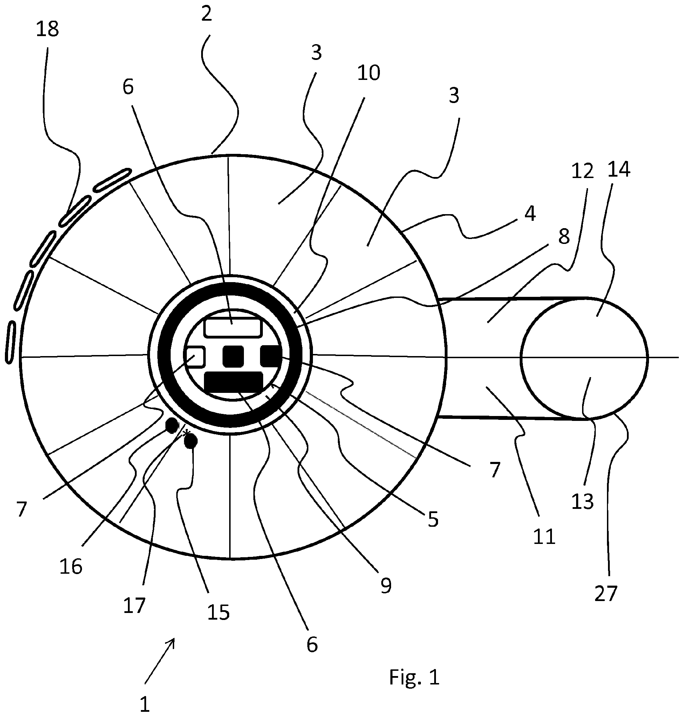

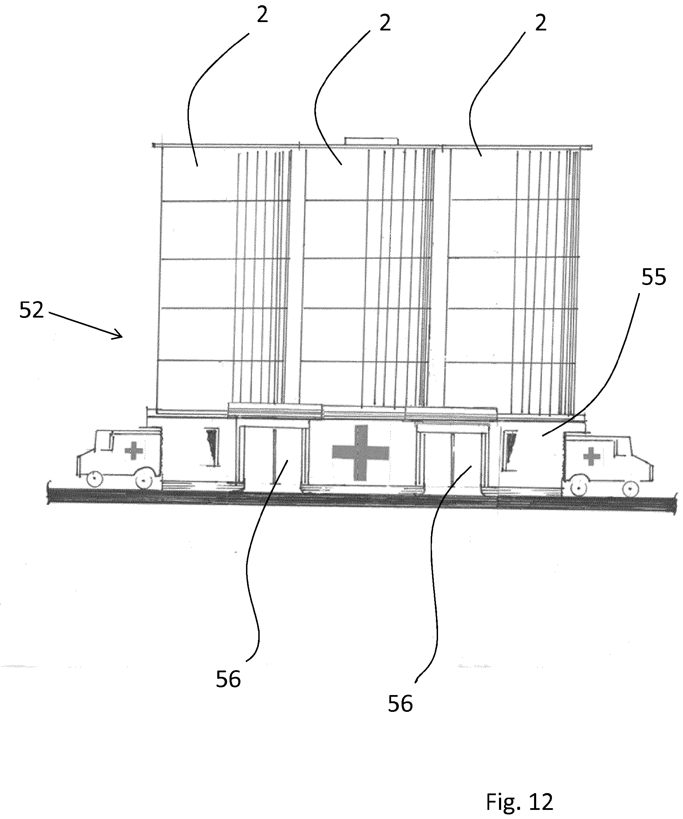

Die Erfindung soll im folgenden anhand von schematisch dargestellten Ausführungsbeispielen, bezugnehmend auf die Zeichnungen Fig. 1 bis Fig. 22 näher erläutert werden.

Fig. 1 zeigt ein erstes Ausführungsbeispiel eines Krankenhauses 1 in einem Querschnitt entlang einer horizontalen Ebene.

Das Krankenhaus 1 umfasst ein kreisförmiges Hauptgebäude 2.

In dem Hauptgebäude 2 sind um einen zentralen kreisförmigen Kernbereich 5 Patientenzimmer 3 herum angeordnet.

Die Patientenzimmer 3 sind vorzugsweise als selbsttragende vorgefertigte Module ausgestaltet. In jedem Patientenzimmer 3 sind ein oder mehrere Patientenbetten angeordnet (nicht dargestellt).

Es versteht sich, dass die Patientenzimmer 3 in diesem Ausführungsbeispiel nicht rechteckig ausgebildet sind, sondern zur Außenwand des Hauptgebäudes 2 hin größer werden. Der Kernbereich 5 kann ebenfalls als vorgefertigtes Modul ausgebildet sein.

Im Kernbereich 5 befinden sich Behandlungsstationen 7, in welcher nach herkömmlicher Weise Zimmer oder zumindest Abtrennungen vorgesehen sind, in denen es Behandlungsbereiche gibt, wo Ärzte die Patienten behandeln oder untersuchen.

Weiter sind Fahrstühle 6 im Kernbereich 5 vorgesehen, über die Patienten oder Personal in andere Stationen des Hauptgebäudes 2 gelangen können.

Um den Kernbereich 5 herum erstreckt sich ein Gang mit einem ringförmigen Fahrsteig 8. Über den Fahrsteig 8 können die einzelnen Patientenzimmer 3 schnell und auf kurzen Wegen erreicht werden.

Angrenzend zum Fahrsteig 8 erstreckt sich beidseitig ein Laufsteig 9, 10.

Um beispielsweise ein Behandlungszimmer 3 zu betreten, kann die betreffende Person auf den Laufsteig 10 überwechseln und sodann durch die Tür (nicht dargestellt) in das Patientenzimmer 3 eintreten.

Es versteht sich, dass auch die einzelnen Patientenzimmer 3 noch Zwischenwände enthalten können, um diese in mehrere Einzelzimmer aufzuteilen.

Die Patientenzimmer 3 verfügen vorzugsweise über gegenüberliegende Bäder 15, 16, welche über einen dazwischen liegenden Serviceschacht 8, 17 angeschlossen werden können.

Die Wand 4 des Hauptgebäudes 2 besteht vorzugsweise aus den Teilabschnitten der einzelnen modular ausgestalteten Patientenzimmer 3.

Das Hauptgebäude 2 ist mit einem drehbaren Solarmodul 18 ausgestattet, dessen Drehachse im Kernbereich 5 sitzt.

Angrenzend zum Hauptgebäude 2 befindet sich ein mehrstöckiger Versorgungsturm 27.

In dem Versorgungsturm 27 sind Aufzüge 13, 14 vorgesehen.

Über die Aufzüge 13, 14 werden die einzelnen Etagen des Krankenhauses 1 mit Medikamenten und sonstigen Waren versorgt.

Der vom Versorgungsturm 27 ausgehende Gang ist vorzugsweise in zwei Bereiche 11, 12 aufgeteilt. Über den Gang 11 werden beispielsweise Waren abtransportiert und über den Gang 12 Waren antransportiert.

Dieses Konzept hat zur Folge, dass sich die Bereiche, in denen im Kernbereich 5 Patienten transportiert werden, nicht mit den Wegen des Versorgungsbereiches überschneiden.

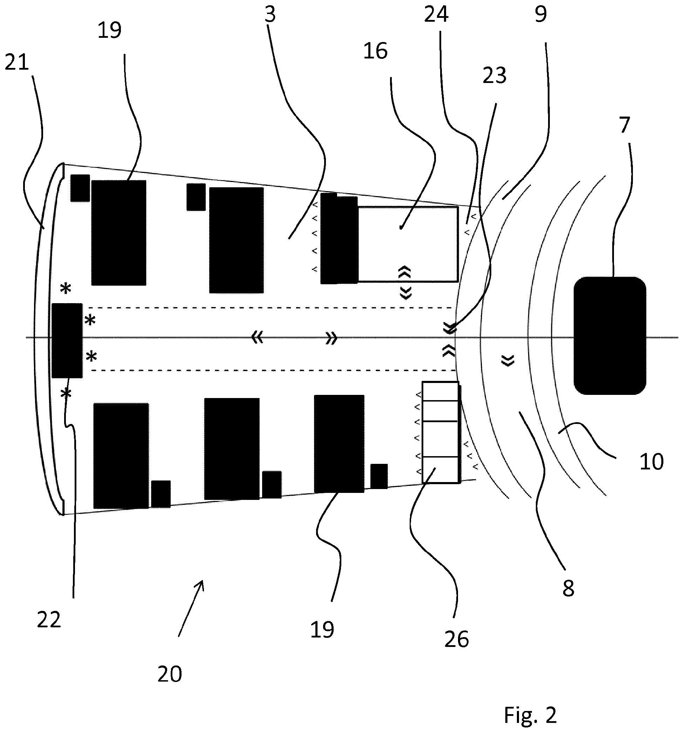

Fig. 2 zeigt eine Detaildarstellung eines einzelnen Patientenmoduls 20, welches ein Patientenzimmer 3 ausbildet.

Das Modul 20 ist derart ausgebildet, dass dieses mit weiteren im wesentlichen baugleichen Modulen gestapelt und zu einem ringförmigen Gebäudeabschnitt aufgebaut werden kann.

Das Modul 20 verfügt an der Außenseite über ein Fenster 21.

In dem Modul 20 sind in diesem Ausführungsbeispiel mehrere Betten 19 angeordnet.

Weiter verfügt das Modul 20 über ein Bad 16, welches über zentrale Anschlüsse (nicht dargestellt) mit Wasser und Energie versorgt wird.

Das Modul 20 kann über eine berührungslos öffnende Tür 23 betreten werden.

Die berührungslos öffnende Tür 23 grenzt an einen Gang an, in welchem der Fahrsteig 8 angeordnet ist.

Wird nun ein Patient von dem Patientenzimmer 3 in den Kernbereich verbracht, kann dieser über den Laufsteig 9 den Fahrsteig 8 erreichen und sodann über den Laufsteig 10 über eine weitere berührungslos öffnende Tür (nicht dargestellt) in den Kernbereich eintreten und die Behandlungsstation 7 erreichen.

Weiter umfasst das Patientenmodul 20 eine an ein Bad angrenzende Durchreiche 24, über die beispielsweise Handtücher vom Gang in das Bad 16 geschoben werden können.

Eine weitere Durchreiche 26 ist für Essen und Medikamente vorgesehen.

Aufgrund der Durchreichen können Medikamente sowie Essen in das Patientenzimmer 3 verbracht werden, ohne dass dieses betreten werden muss.

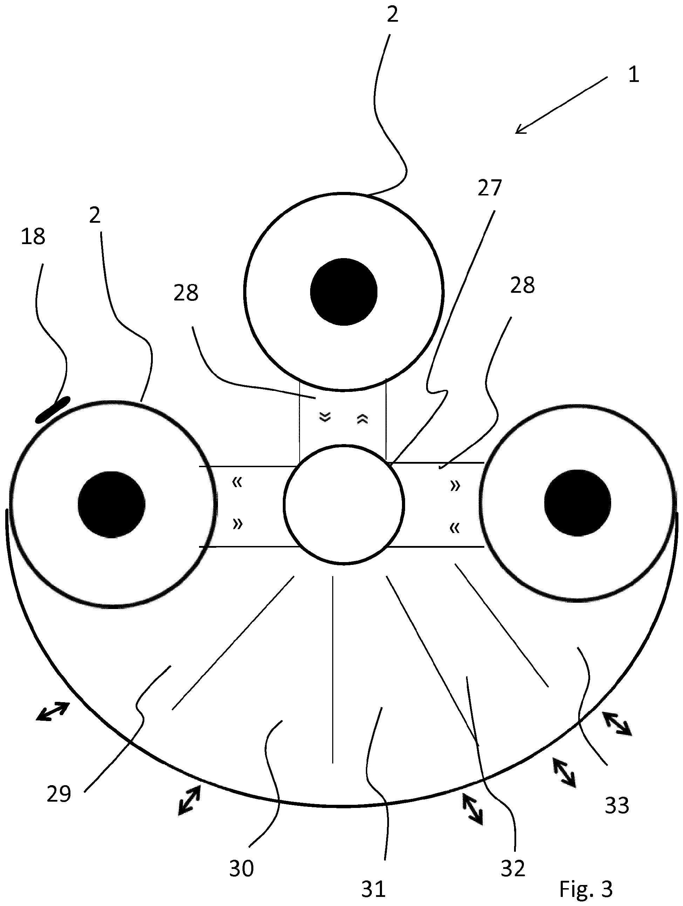

Fig. 3 zeigt ein Krankenhaus 1 mit über insgesamt 500 Betten.

Das Krankenhaus 1 umfasst mehrere, in diesem Ausführungsbeispiel drei, Hauptgebäude 2, welche denen in Fig., 1 entsprechen und insbesondere ein drehbares Solarmodul 18 umfassen können.

Die einzelnen Hauptgebäude 2 sind mittels Gängen 28 mit einem Versorgungsturm 27 verbunden.

Auch der Versorgungsturm 27 entspricht im wesentlichen dem in Fig. 1 dargestellten Ausführungsbeispiel, wobei in diesem Ausführungsbeispiel der Versorgungsturm gleichzeitig für die Versorgung von drei Hauptgebäuden vorgesehen ist. An der Seite des Krankenhauses, an welcher sich kein Hauptgebäude befindet, sind die Zufahrten für die Versorgung des Krankenhauses angeordnet.

Es gibt einen Lieferbereich für Medizinprodukte 29, einen Lieferbereich für Essen 30, einen Lieferbereich für Wäsche 31, einen Lieferbereich für die Gebäudeinstandhaltung 32 sowie einen Abholbereich 33 für Müll.

Der Versorgungsturm 27 kann so effizient beschickt werden.

Die Versorgungsseite ist von der Patientenseite komplett abgekoppelt, was auch die Gefahr der Übertragung von Krankheitskeimen reduziert.

Im Versorgungsturm 27 sowie in den Gängen 28 sind die Richtungen, über die die Waren bewegt werden, voneinander getrennt.

Es ist insbesondere auch vorgesehen, dass über den Versorgungsturm, in welchem sich Fahrstühle befinden sowie über die Gänge automatisierte Fahrzeuge (nicht dargestellt) die einzelnen Hauptgebäude mit Medikamenten und weiteren Waren versorgen.

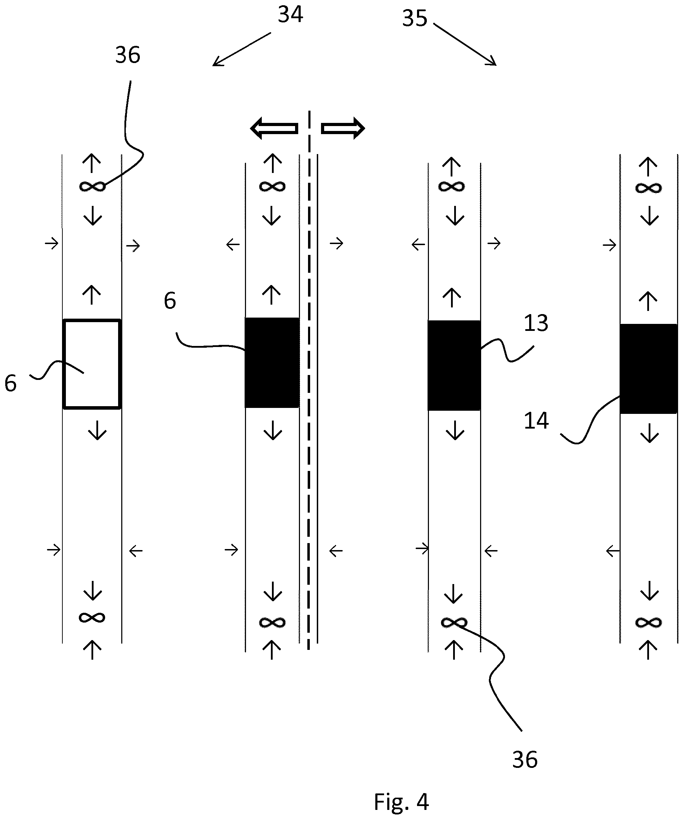

Fig. 4 zeigt das Prinzip der Aufzüge, welche in eine saubere Patientenseite 34 sowie in eine Versorgungsseite 35 unterteilt sind.

Die Aufzüge umfassen in diesem Ausführungsbeispiel in den Schächten oben und unten Windgeneratoren 36 zur Energieerzeugung, welche ebenfalls zur Elektrizitätsversorgung des Krankenhauses beitragen können.

Über die Aufzüge der sauberen Seite 34 werden Patienten transportiert.

Über die Aufzüge 13 und 14 wird das Gebäude versorgt.

Die Aufzüge 6 sind mit berührungslos öffnenden Türen versehen.

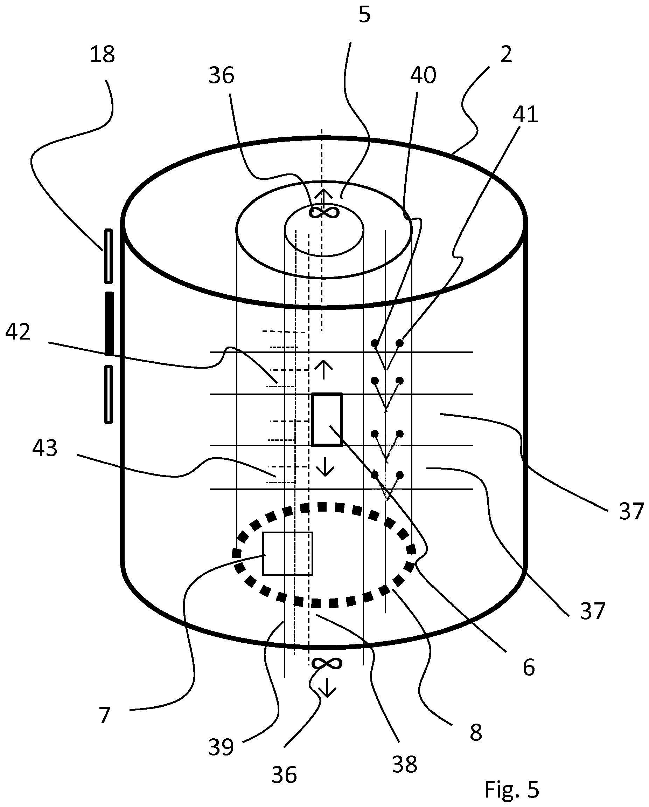

Fig. 5 zeigt eine Prinzipskizze eines Hauptgebäudes 2 in perspektivischer Form.

Das Hauptgebäude 2 ist kreiszylinderförmig ausgebildet und umfasst ein sich drehendes Solarmodul 18.

In einem zentral angeordneten Kernbereich ist zumindest ein Fahrstuhl 6 für Patienten und Krankenhauspersonal vorgesehen.

Oberhalb und unterhalb des Fahrstuhls 6 sind Windgeneratoren 36 angeordnet.

Das Krankenhaus umfasst eine Mehrzahl von Etagen 37.

In den Etagen befinden sich Behandlungsstationen 7. Die auf den verschiedenen Etagen angeordneten Behandlungsstationen 7 können mittels des Fahrstuhls 6 erreicht werden.

Weiter befindet sich auf jeder Etage ein Fahrsteig, welcher sich um den Kernbereich 5 erstreckt.

Im Kernbereich befindet sich ein Klimatisierungsschacht 39, welcher vertikal durch den Kernbereich verläuft.

Die einzelnen Module (nicht dargestellt) sind über Klimatisierungsanschlüsse 42 mit dem Klimatisierungsschacht 39 verbunden.

Vorzugsweise werden die Module unter leichtem Überdruck gehalten, so dass keine Luft im Gebäude zirkuliert. Die Gefahr der Übertragung von Keimen wird hierdurch weiter reduziert.

Weiter vorgesehen ist ein Schacht zur Elektrizitätsversorgung 38.

Die einzelnen Module sind an dem Schacht zur Elektrizitätsversorgung über Elektroanschlüsse 43 angeschlossen.

Weiter gibt es Anschlüsse an einen Müllschacht 41 sowie Wasseranschlüsse 40, welche ebenfalls an einer zentralen Leitung angeschlossen sind.

Über einen Müllschacht 41 kann auch die Entsorgung zentral durch den Kernbereich erfolgen.

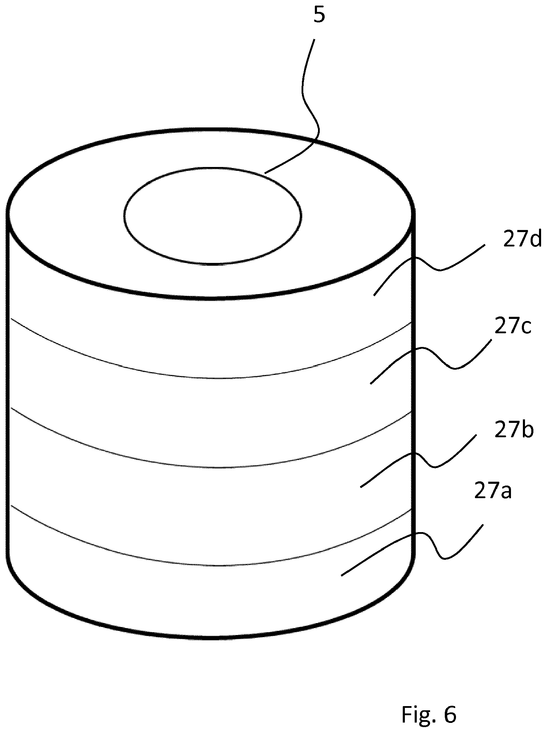

Fig. 6 zeigt eine Prinzipskizze, wie die einzelnen Etagen 27a bis 27d aufeinander gestapelt sind.

Jede Etage besteht aus einer Mehrzahl an Modulen (Fig. 2). Auch der Kernbereich 5 ist vorzugsweise modular und stapelbar ausgebildet.

In der Etage 27a kann beispielsweise ein Parkhaus sowie Lagerraum für die Versorgung des Krankenhauses angeordnet sein. Etage 27b umfasst einen Empfangsbereich und die Etagen 27c und 27d umfassen neben Patientenzimmern in dem äußeren ringförmigen Bereich Behandlungsstationen im Kernbereich.

Es versteht sich, dass das hier dargestellte Hauptgebäude mit einem in den vorangehenden Zeichnungen dargestellten Versorgungsturm gekoppelt werden kann.

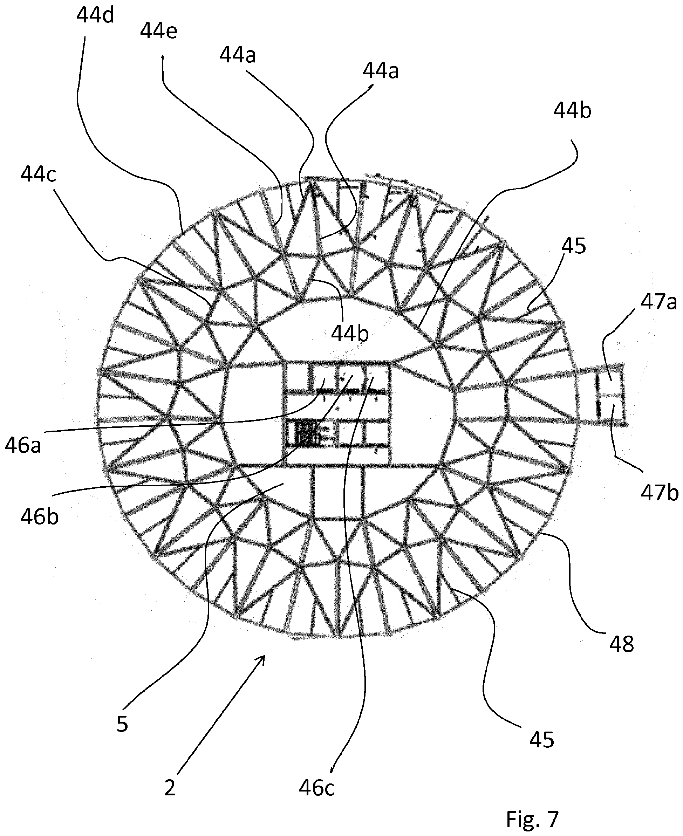

Fig. 7 zeigt in einer schematischen Ansicht von oben eine beispielhafte Skelettstruktur 48 eines Hauptgebäudes 2.

Die Skelettstruktur 48 ist ringförmig ausgebildet und umfasst eine Mehrzahl verschiedener Träger 44a bis 44e.

In diesem Ausführungsbeispiel ist es gelungen, mit fünf verschiedenen Arten von Trägern 44a - 44c eine derartige Skelettstruktur auszubilden. Die Träger 44d bilden dabei die Außenseite.

Die Träger 44e erstrecken sich von außen bis zum Kernbereich 5, welcher beispielsweise auch als Zement ausgebildet sein kann.

Zwischen jeweils zwei Trägern der Sorte 44e ist Platz für jeweils zwei Module (nicht dargestellt) vorgesehen. Hierzu befindet sich von außen ausgehend mittig der kürzere Träger 44a, welcher in Richtung der Mitte des Kernbereiches 5 zeigt. An einem äußeren Verbindungspunkt des Trägers 44a laufen zwei weitere Träger der Träger 44a derselben Länge dreieckförmig auseinander und sind wiederum mit jeweils einem Träger 44e verbunden. Am Ende des mittigen Trägers 44a fächert sich dieser mittige Träger in die Träger 44b und 44c auf. Diese vier Träger, welche zusammenlaufen, stützen die eingeschobenen Module von unten. In Kernbereich sind die Fahrstühle 46a bis 46c angeordnet, welche dem Transport von Gästen, Patienten und Personal dienen.

In einem separaten Versorgungsturm kann über die Fahrstühle 47a bis 47b die Versorgung des Hauptgebäudes 2 sichergestellt werden.

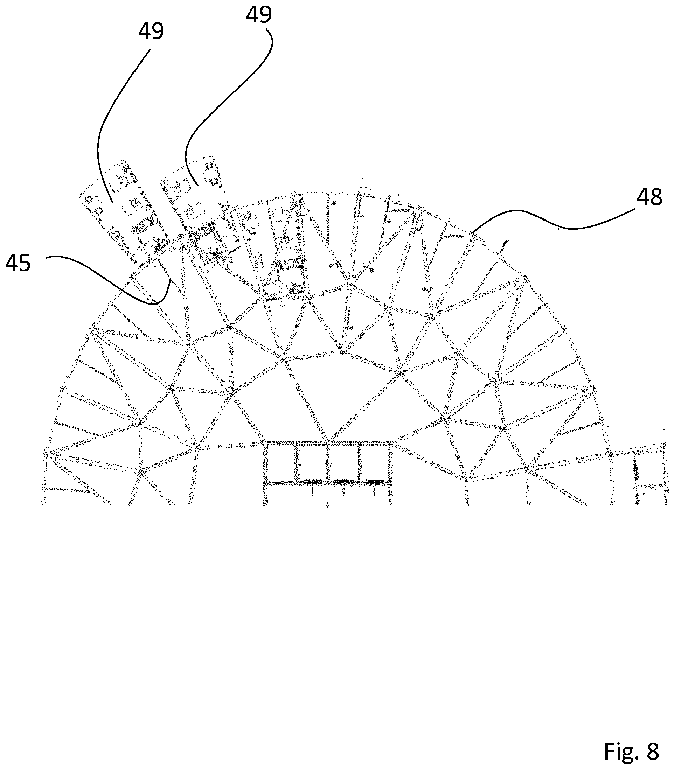

Bezug nehmend auf Fig. 8 soll das Einschieben der Module 49 in die Skelettstruktur 48 erläutert werden.

Zu erkennen ist, dass die Module 49 von der Seite in die Skelettstruktur eingeschoben werden.

Die Schiene 45 der Skelettstruktur dient dabei der Führung des jeweiligen Moduls. Die Schiene 45 kann mit hoher Maßgenauigkeit in die Skelettstruktur 48 eingesetzt werden und ermöglicht ein einfaches radiales Positionieren des jeweiligen Moduls 49.

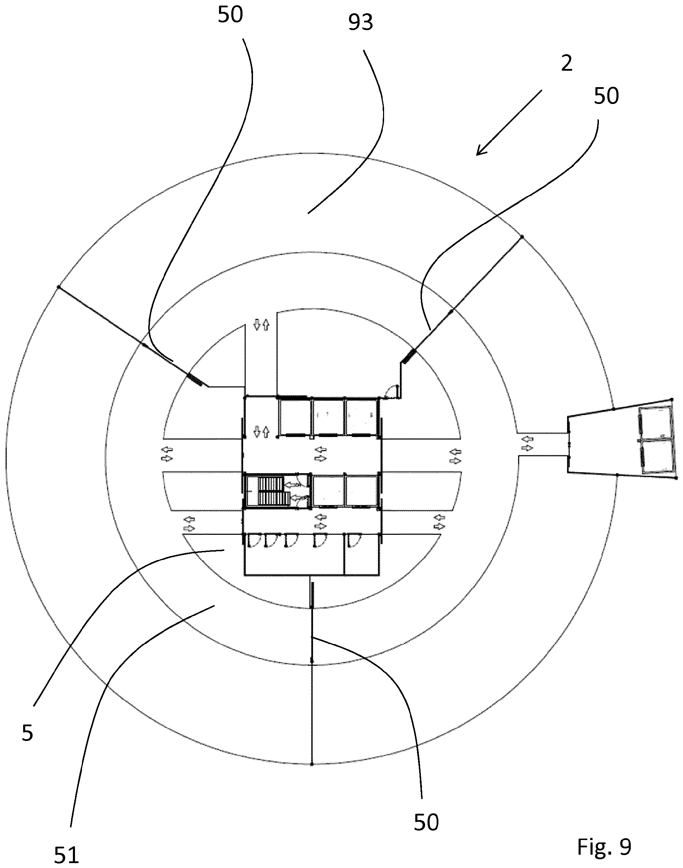

Fig. 9 zeigt schematisch dargestellt ein Hauptgebäude mit Schiebetüren 50, welche den Gang 51 zwischen Kernbereich 5 und dem Ring 93, bestehend aus den einzelnen Modulen, in geschlossenem Zustand in Segmente einteilen.

Die Schiebetüren 50 können in den Ring 93 eingeschoben werden.

Über die Schiebetüren 50 lässt sich sowohl ein Brandschutz als auch eine Isolierung einzelner Bereiche bereitstellen.

Durch das erfindungsgemäße Gebäudekonzept können so auf sehr einfache Weise einzelne Bereiche eines herkömmlichen Krankenhauses kurzfristig in Isolierstationen ungewidmet werden.

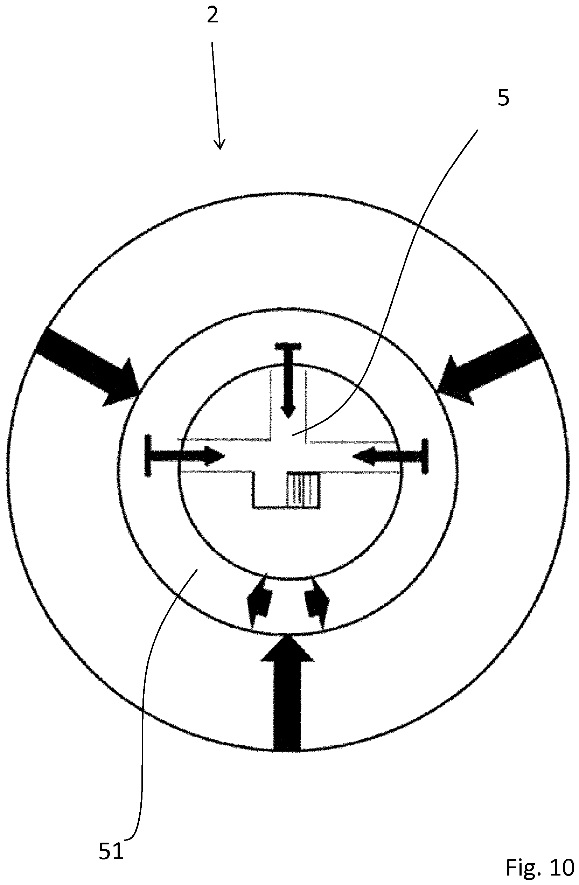

Bezugnehmend auf Fig. 10 werden die durch das erfindungsgemäße Gebäudekonzept besonders kurzen Wege deutlich sichtbar.

Die Bewegungsrichtung von Personen beim Verlassen des Gebäudes ist aber durch Pfeile gekennzeichnet.

Zu erkennen ist, dass über den im Kernbereich 5 angeordneten Gang das Gebäude über sehr kurze Wege verlassen werden kann.

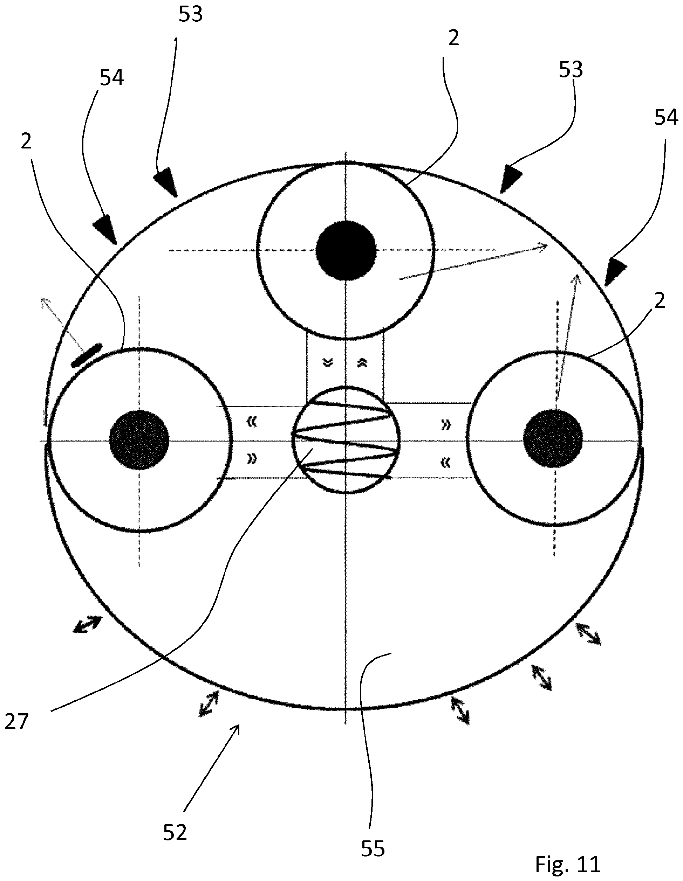

Fig. 11 zeigt ein Gebäudekomplex 52, welcher der Ausführungsform in Fig. 3 ähnelt.

Der Gebäudekomplex 52 umfasst drei Hauptgebäude 2, welche jeweils eine Kernzone aufweisen, um die Module zur Unterbringung von Patienten oder Gästen angeordnet sind. Mittig zwischen den Hauptgebäuden 2 befindet sich ein Versorgungsturm.

Die Versorgung erfolgt wie in Fig. 3 bereits dargestellt von einer hinteren Seite.

Im Unterschied zu Fig. 3 umfasst der Gebäudekomplex 52 eine große kreisförmige untere Etage 55, auf welcher die Hauptgebäude 2 sowie der Versorgungsturm 27 angeordnet sind.

Gegenüber dem Versorgungsbereich, also auf der Vorderseite des Gebäudes, befinden sich die Eingänge zur Rezeption 53 sowie zur Ambulanz 54.

Die Versorgungswege sind so von den Wegen von Gästen, Personal oder Patienten getrennt.

Fig. 12 zeigt eine Seitenansicht eines derartigen Gebäudekomplexes 52 von vorn.

Zu erkennen sind die Eingänge 56 etwa zur Ambulanz oder zur Rezeption, welche sich in der unteren Etage 55 befinden, die die einzelnen Hauptgebäude 2 miteinander verbindet.

Fig. 13 zeigt eine Rückseitenansicht des Gebäudekomplexes 52.

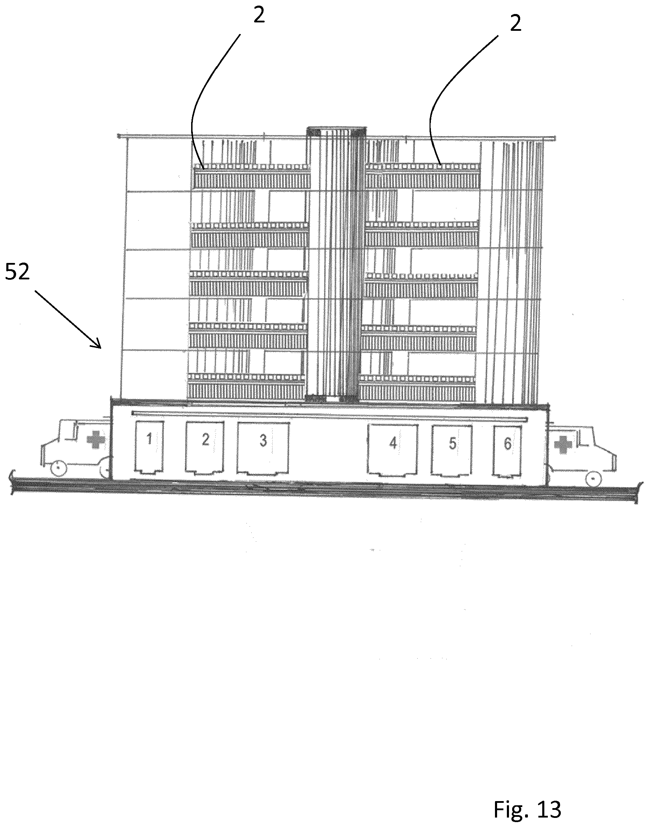

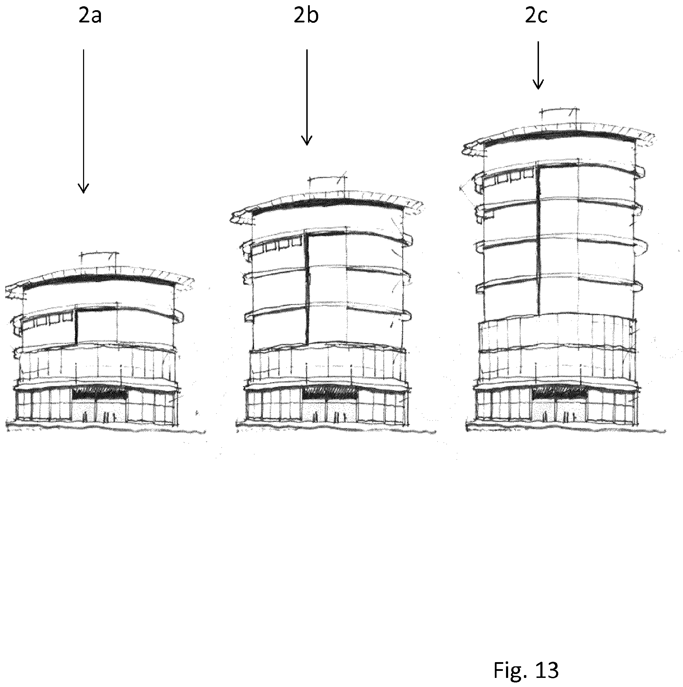

In diesem Ausführungsbeispiel sind die mit den Ziffern 1 bis 6 beschrifteten Anfahrrampen vorgesehen, um den Gebäudekomplex über Fahrzeug mit Wäsche und Nahrungsmitteln zu versorgen sowie um auch die Entsorgung sicherzustellen. Fig. 13 verdeutlicht, dass über das erfindungsgemäße modulare Gebäudekonzept auf sehr einfache Weise unterschiedlich große Hauptgebäude 2a bis 2c mit gleichen Teilen errichtet werden können.

Das Gebäude 2a weist nur vier Etagen auf, wohingegen das Gebäude 2c acht Etagen aufweist.

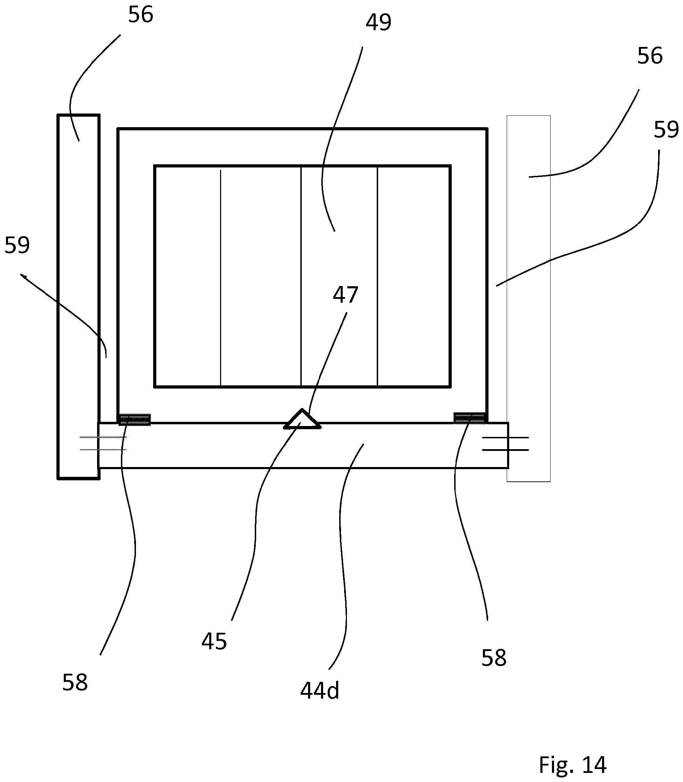

Bezug nehmend auf Fig. 14 soll das Einsetzen eines Moduls 49 in die Skelettstruktur näher erläutert werden.

Das Modul 49 umfasst eine Nut 47, über die das Modul 49 auf die Schiene 45 geschoben wird.

Zwischen den Seitenwänden des Moduls 49 und den vertikalen Trägern 56 der Skelettstruktur befindet sich jeweils eine Spalt 59. Der Spalt 59 hat vorzugsweise eine Breite von einigen Zentimetern.

Über den Spalt 59 können Bauteiltoleranzen des Moduls 49 oder der Skelettstruktur aufgefangen werden.

Durch die Schiene 45 wird da Modul 49 automatisch mittig zwischen den vertikalen Trägern 56 positioniert.

Sodann kann über randseitige Höhenverstellelemente 58 das Modul 49 exakt waagerecht ausgerichtet werden.

Die Höhenverstellelemente 58 können gleichzeitig auch einen Elastomerbereich umfassen und mithin auch als Dämpfer dienen.

Die verbleibenden Spalte 59 können mit einer Verkleidung (nicht dargestellt) versehen werden, welche insbesondere Teil der Fassade ist.

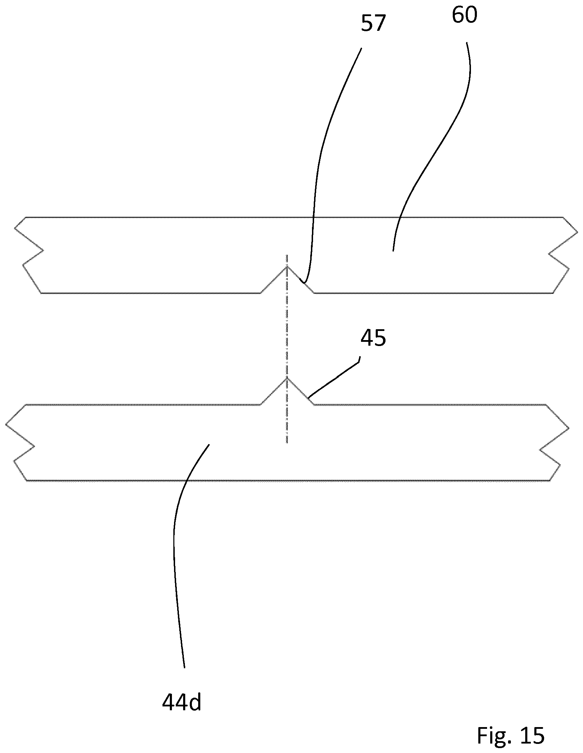

Fig. 15 zeigt eine Detaildarstellung.

Zu erkennen ist ein Abschnitt des Trägers 44d, auf welchem die Schiene 45 angebracht, welche in diesem Ausführungsbeispiel einen dreieckigen Querschnitt aufweist.

Der Boden 60 des Moduls weist eine korrespondierende Nut 57 mit in diesem Ausführungsbeispiel dreieckförmigen Querschnitt auf.

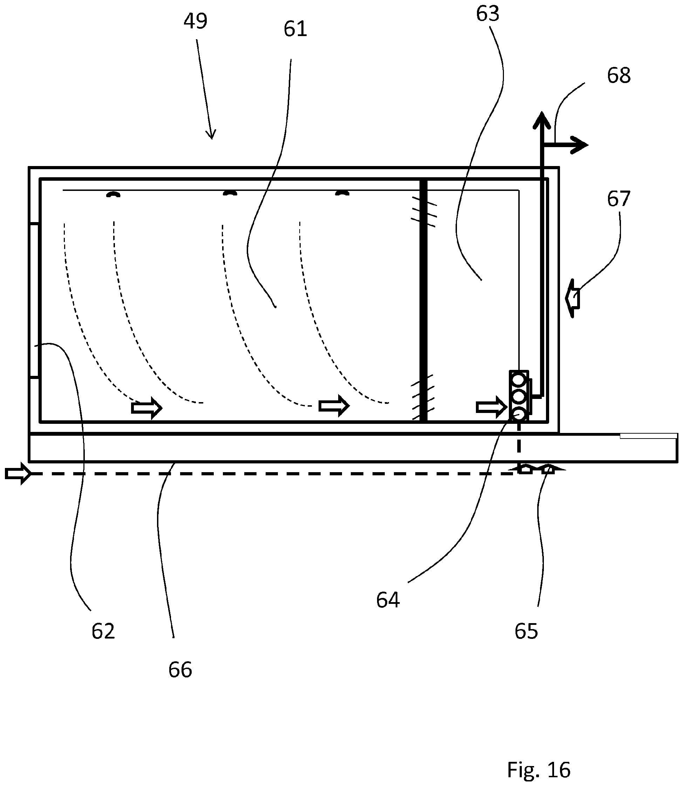

Fig. 16 zeigt eine schematische Schnittansicht eines Moduls 49.

Zu erkennen ist, dass das Modul einen Aufenthaltsraum 61 mit einem Fenster 62 aufweist, welches im eingebauten Zustand die Außenseite des Hauptgebäudes bildet.

Neben dem Aufenthaltsraum, welcher insbesondere im Falle der Verwendung für ein Krankenhaus ein Bett umfasst, weist das Modul eine Nasszelle 63 mit zumindest Toilette und Waschbecken auf. Die Nasszelle 63 umfasst eine Klimatisierungsanlage 64, welche beispielsweise unter einem Waschbecken (nicht dargestellt) angeordnet sein kann.

Über eine Frischluftzufuhr 66 gelangt frische Luft in die Klimatisierungsanlage 64.

Weiter umfasst das Modul Anschlüsse für Wasserzulauf/- ablauf 65. Über die Klimatisierungsanlage 64 wird Abluft 68 wieder nach außen geführt oder zentral gesammelt, um Energie rückgewinnen zu können. Auch das Modul selbst kann Wärmetauscher umfassen, um abgeführte Brauchluft abzukühlen und die angesaugte Frischluft vorzuwärmen.

Über den Zugang 67 ist von einer Seite her die Technik des Moduls 49 leicht zugänglich.

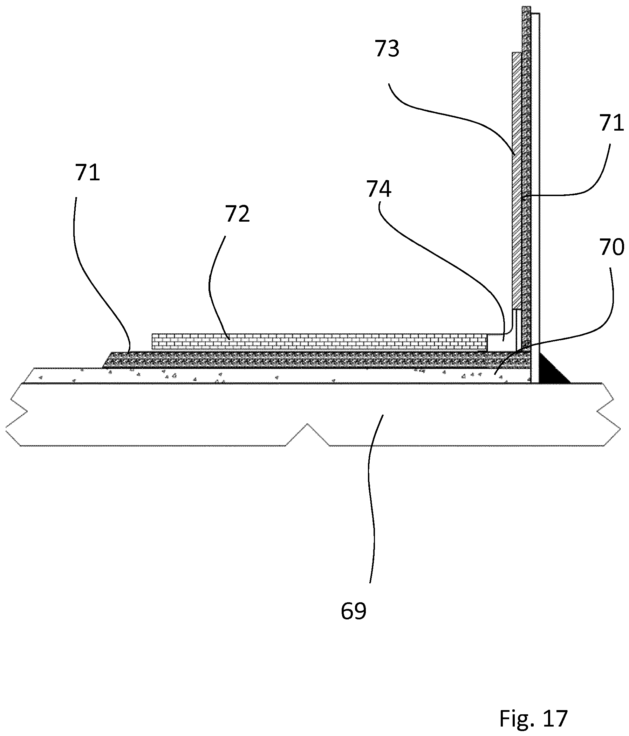

Fig. 17 zeigt eine Detaildarstellung der Ausgestaltung von Wand und Boden eines beispielhaften erfindungsgemäßen Moduls.

Zu erkennen ist der Träger 69, welcher den Boden des Moduls bildet und welcher die Nut umfasst, um dieses einschieben zu können.

Auf dem Träger 69 befindet sich eine Feuerschutzschicht 70.

Sowohl Wand und Boden sind mit einer Isolierschicht 71 versehen.

Auf die Isolierschicht 71 ist der Bodenbelag 72 bzw. Wandbelag 73 aufgebracht.

Weiter ist zwischen Bodenbelag 72 und Wandbelag 73 ein Metallprofil 74 eingelassen, welches abgerundet ist und Wand- und Bodenbelag miteinander verbindet.

Aufgrund der so abgerundeten Ecke kann das erfindungsgemäße Modul auf einfache Weise mit einem Roboter auch feucht gereinigt werden.

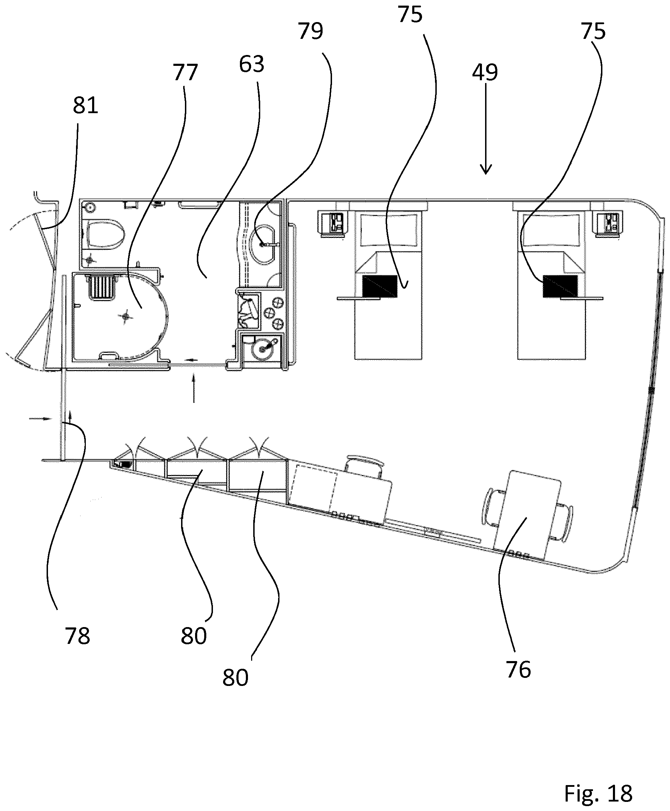

Fig. 18 zeigt eine Ansicht eines Ausführungsbeispiels eines Moduls 49 für Patienten.

Das Modul 49 ist keilförmig ausgebildet und über eine Schiebetür 78, welche berührungslos geöffnet wird, an der kurzen Seite zugänglich.

Ebenfalls an der kurzen Seite befindet sich eine in das Modul eingeschobene Nasszelle 63, die insbesondere eine Dusche und ein Waschbecken 79 umfasst.

Die Nasszelle 63 ist über die Türen 81 rückseitig zugänglich. So kann Wartung ausgeführt werden. Gegebenenfalls ist auch denkbar, über die Türen 81 Handtücher oder frische Wäsche von hinten in die Nasszelle einzulegen.

Auch die Nasszelle umfasst eine berührungslos betätigbare Schiebetür 82.

Der Tisch 76 sowie die Regale 80 sind vorzugsweise lediglich an der Wand befestigt, so dass der darunterliegende Boden über einen Roboter reinigbar ist.

Das hier dargestellte keilförmige Design ermöglicht zum einen eine optimale Raumausnutzung.

Fig. 18a zeigt eine weitere Ausführungsform eines Moduls, welches im Wesentlichen dem in Fig. 18 dargestellten Modul entspricht. Im Unterschied zu der in Fig. 18 dargestellten Ausführungsform umfasst das in Fig. 18a dargestellte Modul einen Eingangsbereich mit einer Schleuse 94.

Die Schleuse 94 dient insbesondere dem Anlegen eines Schutzanzugs.

Dazu ist die Schleuse zum Aufenthaltsraum des Patienten über eine Automatiktür 95 zugänglich.

Die Schleuse 94 steht gegenüber dem Aufenthaltsbereich des Moduls unter Überdruck, so dass beim Öffnen der Automatiktür 95 eine Kontamination der Schleuse und damit des dahinterliegenden Krankenhausbereiches vermieden wird.

In der Schleuse befindet sich ein Schrank 96, in welchem beispielsweise Schutzkleidung aufgewahrt werden kann. Weiter umfasst der Schrank 96 vorzugsweise einen Spender für eine Desinfektionsflüssigkeit, welchen das Personal beim Betreten der Schleuse 94 verwenden kann.

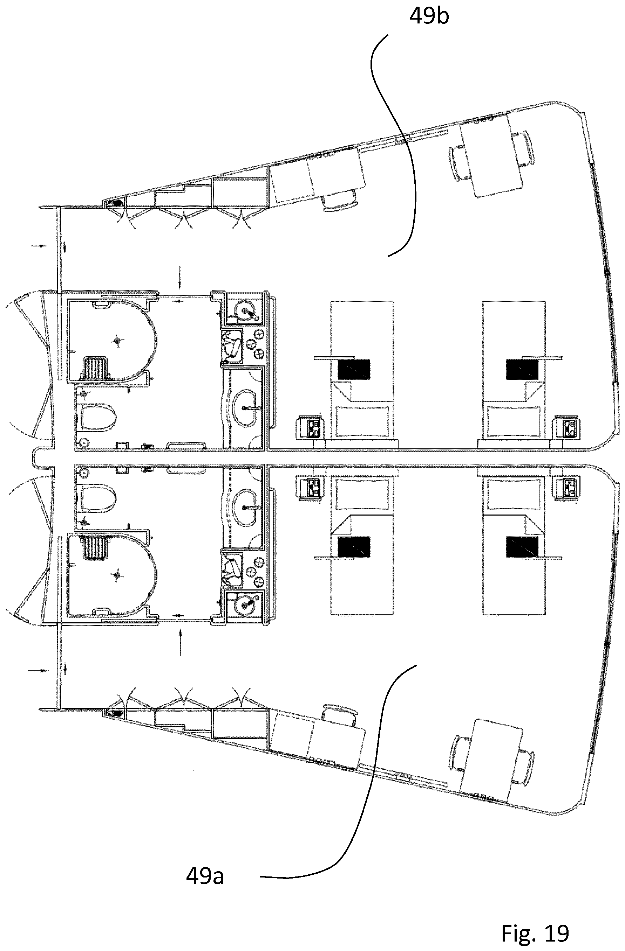

Wie in Fig. 19 dargestellt ist, können zwei Modultypen 49a und 49b bereitgestellt werden, welche spiegelverkehrt aufgebaut sind.

Die Module verfügen über eine rechtwinklig aufgebaute Seite mit der Nasszelle und den Betten, wohingegen die gegenüberliegende Seite randseitig keine rechten Winkel aufweist. Da dieser Bereich als Aufenthaltsbereich dient, ist eine rechteckige Ausgestaltung nicht erforderlich und ermöglicht eine optimale Raumausnutzung, um so zusammen mit weiteren Modulen einen Ring des Gebäudes zu bilden.

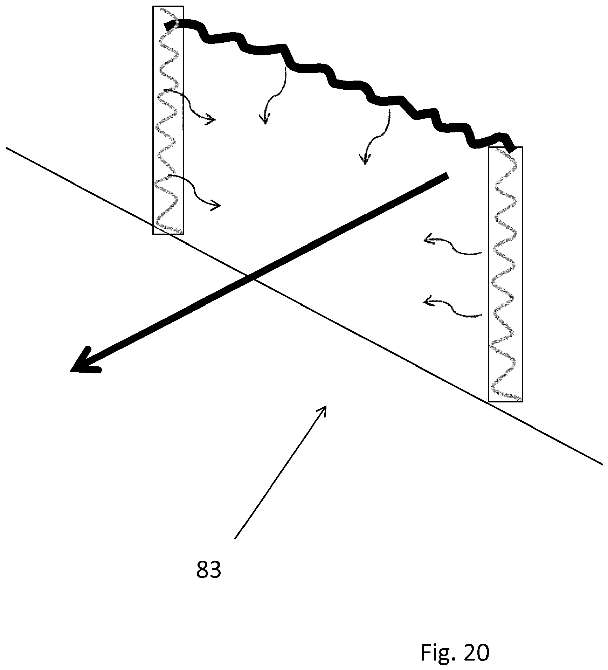

Fig. 20 zeigt eine UV-Schleuse 83, welche insbesondere in dem beispielsweise in Fig. 1 dargestellten Gang (12 in Fig. 1) vom Versorgungsturm Einsatz findet.

Die für die Versorgung des Gebäudes verwendeten Wagen werden durch das UV-Licht desinfiziert und es wird so die Infektionsgefahr reduziert, wenn sich die Versorgungsfahrzeuge im Patientenbereich eines Krankenhauses befinden.

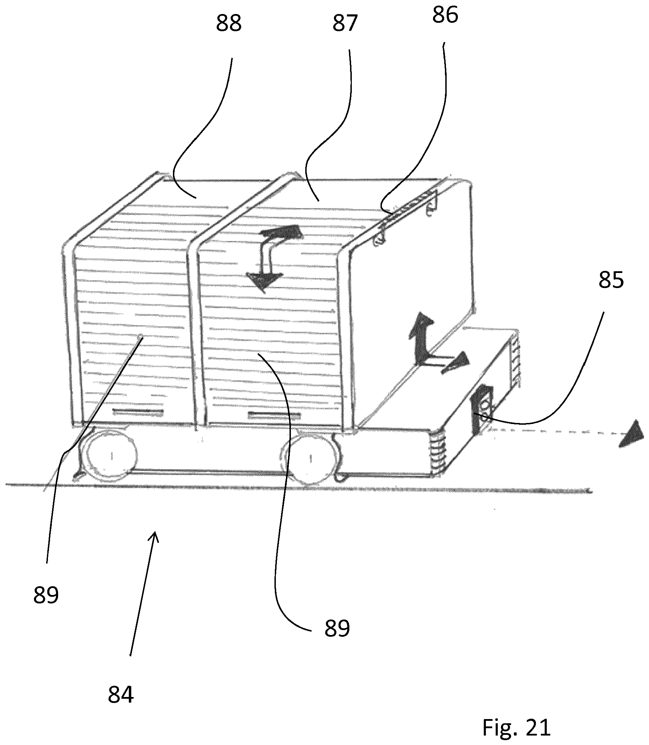

Fig. 21 zeigt ein selbsttätig fahrendes Fahrzeug 84, wie es für das erfindungsgemäße Gebäudekonzept verwendet werden kann.

Das Fahrzeug 84 umfasst eine Sensoreinheit 85. Die Konstruktion selbsttätig fahrender Fahrzeuge ist vom Grundsatz her dem Fachmann bekannt.

Einfach ausgebildete Fahrzeuge orientieren sich an einem im Boden eingebrachten Streifen, beispielsweise einem Magnetstreifen und weisen Infrarot- oder Ultraschallsensoren auf, um das Fahrzeug anzuhalten, wenn eine Person davor steht.

Das erfindungsgemäße Fahrzeug ist batteriebetrieben und weist zwei Kammern 87, 88 auf, von denen eine Kammer zum Ausliefern von warmen Mahlzeiten vorgesehen ist, während die andere Kammer kühl ist und beispielsweise der Aufbewahrung von Obst oder Kaltgetränken dient.

Die Kammern 87, 88 können auch über ein Kältegerät gekühlt und auch gewärmt werden.

Die Kammern 87, 88 sind über Rollläden 89 verschlossen.

Beim Verteilen des Essens werden die Rollläden nach oben geschoben und geben so nach und nach Einschübe für das Essen frei. Es ist so sichergestellt, dass der jeweilige Einschub erst geöffnet wird, wenn das Essen ausgegeben wird.

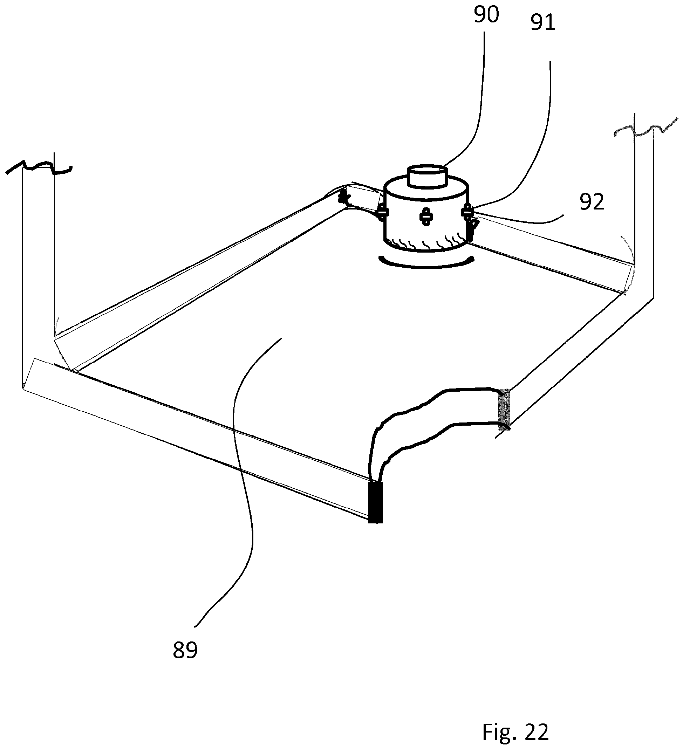

Fig. 22 verdeutlicht die Reinigung des Bodens 89 eines Moduls mittels eines Reinigungsroboters 90.

Der Reinigungsroboter 90 umfasst Sensoren 91 sowie randseitig angeordnete Bürsten 92 oder Lappen.

Aufgrund der rundum abgerundeten Ecken und Kanten, über die der Boden 89 zur Wand übergeht, ist eine vollautomatisierte Reinigung des gesamten Bodens einschließlich der Ecken und Kanten möglich.

Durch die Erfindung kann ein wesentlich effizienter betreibbares Krankenhaus mit kurzen Wegstrecken zur optimalen Patientenversorgung bereitgestellt werden. Weiter kann das Krankenhaus innerhalb kurzer Zeit aufgebaut werden, ist energieeffizient und raumsparend.

### Bezugszeichenliste

- 1: Krankenhaus
- 2: Hauptgebäude
- 3: Patientenzimmer
- 4: Wand
- 5: Kernbereich
- 6: Fahrstuhl
- 7: Behandlungsstation
- 8: Fahrsteig
- 9: Laufsteig
- 10: Laufsteig
- 11: Gang
- 12: Gang
- 13: Fahrstuhl
- 14: Fahrstuhl
- 15: Bad
- 16: Bad
- 17: Serviceschacht
- 18: Solarmodul
- 19: Bett
- 20: Patientenmodul
- 21: Fenster
- 22: Tisch
- 23: Tür
- 24: Durchreiche
- 25: Durchreiche
- 26: Durchreiche
- 27: Versorgungsturm
- 28: Gang
- 29: Lieferbereich Medizinprodukte
- 30: Lieferbereich Essen
- 31: Lieferbereich Wäsche
- 32: Lieferbereich Instandhaltung
- 33: Abholbereich Müll
- 34: saubere Seite
- 35: Versorgungsseite
- 36: Windgenerator
- 37: Etage
- 38: Schacht zur Elektrizitätsversorgung
- 39: Klimatisierungsschacht
- 40: Wasseranschluss
- 41: Müllschacht
- 42: Klimatisierungsanschluss
- 43: Elektroanschluss
- 44a-e: Träger
- 45: Schiene
- 46a-c: Fahrstuhl
- 47a-b: Fahrstuhl
- 48: Skelettstruktur
- 49: Modul
- 50: Schiebetür
- 51: Gang
- 52: Gebäudekomplex
- 53: Rezeption
- 54: Ambulanz
- 55: untere Etage
- 56: Träger
- 57: Nut
- 58: Höhenverstellelement
- 59: Spalt
- 60: Boden
- 61: Aufenthaltsraum
- 62: Fenster
- 63: Nasszelle
- 64: Klimatisierungsanlage
- 65: Wasserzulauf/-ablauf
- 66: Frischluftzufuhr
- 67: Zugang
- 68: Abluft
- 69: Träger
- 70: Feuerschutzschicht
- 71: Isolierschicht
- 72: Bodenbelag
- 73: Wandbelag
- 74: Metallprofil
- 75: Bett
- 76: Tisch
- 77: Dusche
- 78: Schiebetür
- 79: Waschbecken
- 80: Regal
- 81: Tür
- 82: Schiebetür
- 83: UV-Schleuse
- 84: Fahrzeug
- 85: Sensorteil
- 86: Handhabungsgriff
- 87: Kammer
- 88: Kammer
- 89: Boden
- 90: Reinigungsroboter
- 91: Sensor
- 92: Bürste
- 93: Ring
- 94: Schleuse
- 95: Automatiktür
- 96: Schrank

## Patentansprüche

1. Gebäude, insbesondere ausgebildet als Krankenhaus, umfassend eine Skelettstruktur (48) aus mehreren Etagen, wobei einzelne Module mit einem oder mehreren Zimmern in die Skelettstruktur eingeschoben sind, wobei die Module auf eine Führungsschiene (45), die an der Skelettstruktur angebracht ist, aufgeschoben werden, **dadurch gekennzeichnet, dass** jedes Modul an ihrem Boden eine Nut (57) aufweist, in welche die Führungsschiene eingreift, und wobei am Boden des Moduls zumindest ein Höhenverstellelement (58) angeordnet ist, welches im eingeschobenen Zustand auf der Skelettstruktur aufliegt.

2. Gebäude nach dem vorstehenden Anspruch, **dadurch gekennzeichnet, dass** die Skelettstruktur einen runden oder einen polygonen Querschnitt mit zumindest fünf Ecken aufweist.

3. Gebäude nach Anspruch 1, **dadurch gekennzeichnet, dass** die Nut in etwa mittig angeordnet ist.

4. Gebäude nach einem der vorstehenden Ansprüche, **dadurch gekennzeichnet, dass** jedes Modul im eingeschobenen Zustand auf Vibrationsdämpfern aufliegt.

5. Gebäude nach dem vorstehenden Anspruch, **dadurch gekennzeichnet, dass** die Vibrationsdämpfer Teil eines Höhenverstellelementes sind.

6. Gebäude nach einem der vorstehenden Ansprüche,
**dadurch gekennzeichnet, dass** das Gebäude einen Ring (93) aus eingeschobenen Modulen sowie einen in diesem Ring angeordneten Kernbereich umfasst, insbesondere dass zwischen dem Ring und dem Kernbereich ein Gang (51) angeordnet ist, wobei insbesondere der Gang durch Schiebetüren segmentiert werden kann, insbesondere durch als Feuerschutztüren ausgebildete Schiebetüren (50), wobei insbesondere im Kernbereich zumindest ein Fahrstuhl angeordnet ist.

7. Gebäude nach einem der vorstehenden Ansprüche,
**dadurch gekennzeichnet, dass** in die Skelettstruktur Feuerschutzzwischendecken eingezogen sind.

8. Gebäudekomplex, umfassend eine Mehrzahl von Gebäuden nach einem der vorstehenden Ansprüche, wobei die Gebäude durch zumindest eine gemeinsame untere Etage (55) miteinander verbunden sind.

9. Gebäude nach einem der vorstehenden Ansprüche 1 bis 7, **dadurch gekennzeichnet, dass** jedes Modul angrenzend zum Fußboden abgerundete Zimmerecken aufweist, und/oder dass jedes Modul eine autarke Klimatisierung (64) aufweist, und/oder dass jedes Modul keilförmig ausgebildet ist, wobei an einer langen Stirnfläche zumindest ein Fenster und an einer kurzen Stirnfläche zumindest eine Tür angeordnet ist, und/oder dass jedes Modul eine Nasszelle (63) und einen feuerfesten Boden aufweist, und/oder dass jedes Modul einen Eingangsbereich mit einer Schleuse (94) aufweist, wobei insbesondere die Schleuse gegenüber einem angrenzenden Aufenthaltsraum unter Überdruck steht, wobei insbesondere jedes Modul automatisch öffnende Türen sowie eine Dosiereinrichtung für Desinfektionsflüssigkeit aufweist.

10. Gebäude nach einem der vorstehenden Ansprüche 1 bis 7 oder 9, wobei das Gebäude als Krankenhaus ausgebildet ist, umfassend eine Mehrzahl von Etagen mit auf den Etagen angeordneten Patientenzimmern (3), wobei die Patientenzimmer um einen zentral positionierten Kernbereich mit zumindest einer Behandlungsstation angeordnet sind, und wobei um den Kernbereich ein ringförmiger Fahrsteig (8) angeordnet ist, mittels dessen die Patientenzimmer erreichbar sind.

11. Gebäude nach einem der vorstehenden Ansprüche 1 bis 7,9 oder 10, wobei das Gebäude als Krankenhaus ausgebildet ist, **dadurch gekennzeichnet, dass** das Krankenhaus Etagen aufweist, welche über Fahrstühle miteinander verbunden sind, wobei ein erster Fahrstuhl in einem Kernbereich und/oder Patientenbereich angeordnet ist und wobei ein zweiter Fahrstuhl in einem Versorgungsbereich angeordnet ist, welcher außerhalb des Patientenbereiches angeordnet ist und welcher baulich mit den Etagen verbunden ist.

12. Gebäude nach einem der vorstehenden Ansprüche 1 bis 7,9,10 oder 11, wobei
das Gebäude als Krankenhaus ausgebildet ist, weiter umfassend eine Mehrzahl von zumindest ein Bett umfassenden Patientenmodulen (20) sowie zumindest einen Kernbereich mit einer Behandlungsstation, wobei die Patientenmodule um den Kernbereich herum angeordnet sind.

13. Gebäude nach einem der vorstehenden Ansprüche, 1 bis 7 oder 9 bis 12, wobei das Gebäude als Krankenhaus ausgebildet ist, **dadurch gekennzeichnet, dass** das Krankenhaus einen Patientenbereich sowie einen Versorgungsbereich aufweist, welche über von einander getrennte Wege zugänglich sind, wobei automatisierte Fahrzeuge über den Versorgungsbereich in den Patientenbereich gelangen.

14. Gebäude nach einem der vorstehenden Ansprüche 1 bis 7 oder 9 bis 13, wobei das Gebäude als Krankenhaus ausgebildet ist, **dadurch gekennzeichnet, dass** das Krankenhaus einen Patientenbereich sowie einen Versorgungsbereich aufweist, welche über voneinander getrennte Wege zugänglich sind, wobei Patientenbereich und Versorgungsbereich über separate voneinander getrennte Eingänge betretbar sind, **dadurch gekennzeichnet, dass** der Eingang des Patientenbereichs sich auf einer Vorderseite und der Eingang des Versorgungsbereich sich auf einer Rückseite des Gebäudes befindet.

## Claims

1. A building, in particular configured as a hospital, comprising a skeletal structure (48) with a plurality of floors;
wherein individual modules including one or more rooms are inserted in said skeletal structure; wherein the modules are inserted on a guide rail (45) which is mounted to the skeleton structure;
**characterised in that**
each module has a groove (57) in its underside, in which the guide rail engages; and wherein at least one height adjustment element (58) is provided on the underside of the module, which bears upon the skeletal structure in the inserted state of the module,

2. The building according to the preceding claim, **characterised in that** the skeletal structure has a round cross-sectional shape or a polygonal cross-sectional shape with at least five corners.

3. The building of claim 1, **characterised in that** said groove is located approximately centrally.

4. The building according to any one of the preceding claims, **characterised in that** each module is supported on vibration dampers in its inserted state.

5. The building according to the preceding claim, **characterised in that** the vibration dampers form part of a height adjustment element.

6. The building according to any one of the preceding claims, **characterised in that** the building comprises a ring (93) of inserted modules and a core area arranged inside this ring; in particular that a corridor (51) is provided between the ring and the core area; wherein in particular the corridor can be segmented by sliding doors, in particular by sliding doors (50) in the form of fire protection doors; wherein at least one elevator is provided in the core area.

7. The building according to any one of the preceding claims, **characterised in that** fire protection intermediate ceilings are installed in the skeletal structure.

8. A building complex, comprising a plurality of buildings according to any one of the preceding claims, wherein the buildings are interconnected by at least one common lower floor (55).

9. The building according to any one of the preceding claims 1 to 7, **characterised in that** each module has rounded room corners next to the floor; and/or that each module comprises self-contained air conditioning (64); and/or that each module is wedge-shaped and has at least one window provided along a major end face and at least one door provided along a minor end face; and/or that each module comprises a wet room (63) and a refractory floor; and/or that each module comprises an entrance area with an air lock (94); wherein in particular the air lock is pressurized with respect to an adjacent lounge area; wherein in particular each module comprises automatically opening doors and a metering device for disinfecting liquid.

10. The building according to any one of the preceding claims 1 to 7 or 9, wherein
the building is configured as a hospital, comprising a plurality of floors with patient rooms (3) arranged on the floors, wherein the patient rooms are arranged around a centrally located core area that comprises at least one treatment station, and wherein an annular moving walkway (8) is provided around the core area, via which the patient rooms can be reached.

11. The building according to any one of the preceding claims 1 to 7, 9 or 10, wherein the building is configured as a hospital, **characterised in that** the hospital has floors which are interconnected by elevators, wherein a first elevator is provided in a core area and/or patients area, and wherein a second elevator is provided in a service area which is located outside the patients area and is structurally connected to the floors.

12. The building according to any one of the preceding claims 1 to 7, 9, 10 or 11, wherein the building is configured as a hospital, furthermore comprising a plurality of patient modules (20) each of which includes at least one bed, and at least one core area with a treatment station, wherein the patient modules are arranged around the core area.

13. The building according to any one of the preceding claims 1 to 7 or 9 to 12, wherein the building is configured as a hospital, **characterised in that** the hospital comprises a patients area and a service area, which are accessible via separate paths, wherein automated vehicles have access to the patients area via the service area.

14. The building according to any one of the preceding claims 1 to 7 or 9 to 13, wherein the building is configured as a hospital, **characterised in that** the hospital comprises a patients area and a service area, which are accessible via separate paths, wherein the patients area and the service area are accessible via separate entrances; **characterised in that** the entrance of the patients area is located on a front side and the entrance of the service area on a rear side of the building.

## Revendications

1. Bâtiment, réalisé notamment comme hôpital, comprenant une structure squelette (48) constituée de plusieurs étages, dans lequel des modules individuels, comportant une ou plusieurs pièces, sont glissés dans la structure squelette, les modules étant glissés sur un rail de guidage (45) qui est monté sur la structure squelette, **caractérisé en ce que** chaque module présente dans son plancher une rainure (57) dans laquelle s'engage le rail de guidage, et au moins un élément de réglage en hauteur (58) étant disposé sur le plancher du module, élément qui, à l'état inséré, repose sur la structure squelette.

2. Bâtiment selon la revendication précédente, **caractérisé en ce que** la structure squelette présente une section transversale ronde ou polygonale avec au moins cinq angles.

3. Bâtiment selon la revendication 1, **caractérisé en ce que** la rainure est à peu près disposée au milieu.

4. Bâtiment selon l'une des revendications précédentes, **caractérisé en ce que**, à l'état inséré, chaque module repose sur des amortisseurs de vibrations.

5. Bâtiment selon la revendication précédente, **caractérisé en ce que** les amortisseurs de vibrations font partie d'un élément de réglage en hauteur.

6. Bâtiment selon l'une des revendications précédentes, **caractérisé en ce que** le bâtiment comprend un cercle (93), constitué de modules insérés, ainsi qu'une zone centrale disposée à l'intérieur du cercle, notamment **en ce qu'**un couloir (51) est disposé entre le cercle et la zone centrale, le couloir pouvant notamment être segmenté par des portes coulissantes, en particulier par des portes coulissantes (50) réalisées comme portes coupe-feu, au moins un ascenseur étant disposé notamment dans la zone centrale.

7. Bâtiment selon l'une des revendications précédentes, **caractérisé en ce que** des faux-plafonds coupe-feu sont mis en place dans la structure squelette.

8. Ensemble de bâtiments, comprenant une pluralité de bâtiments selon l'une des revendications précédentes, les bâtiments étant reliés entre eux par au moins un étage inférieur (55) commun.

9. Bâtiment selon l'une des revendications précédentes 1 à 7, **caractérisé en ce que** chaque module présente des angles de pièce arrondi à proximité du plancher, et/en ce que chaque module est doté d'une climatisation (64) autonome, et/ou **en ce que** chaque module est réalisé en forme de coin, au moins une fenêtre étant disposée sur une grande face frontale, et au moins une porte étant placée sur une petite face frontale, et **en ce que** chaque module est équipé d'une salle d'eau (63) et d'un plancher résistant au feu, et/ou **en ce que** chaque module présente une zone d'entrée dotée d'un sas (94), où notamment le sas est en surpression par rapport à une salle commune adjacente, où notamment chaque module présente des portes à ouverture automatique ainsi qu'un dispositif de dosage destiné à un liquide désinfectant.

10. Bâtiment selon l'une des revendications précédentes 1 à 7 ou 9, le bâtiment étant réalisé comme hôpital comprenant une pluralité d'étages avec des chambres de patients (3) installées dans les étages, les chambres de patients étant disposées autour d'une zone centrale placée au milieu et dotée d'au moins un poste de soins, et un tapis roulant (8) circulaire étant disposé autour de la zone centrale et permettant d'atteindre les chambres de patients.

11. Bâtiment selon l'une des revendications précédentes 1 à 7, 9 ou 10, le bâtiment étant réalisé comme hôpital, **caractérisé en ce que** le bâtiment présente des étages qui sont reliés entre eux par des ascenseurs, un premier ascenseur étant disposé dans une zone centrale et/ou une zone de patients, et un deuxième ascenseur étant installé dans une zone d'approvisionnement qui est prévue à l'extérieur de la zone de patients et qui est relié aux étages du point de vue de la construction.

12. Bâtiment selon l'une des revendications précédentes 1 à 7, 9, 10 ou 11, le bâtiment étant réalisé comme hôpital, comprenant en outre une pluralité de modules de patients (20), dotés d'au moins un lit, et au moins une zone centrale dotée d'un poste de soins, les modules de patients étant disposés autour de la zone centrale,

13. Bâtiment selon l'une des revendications précédentes 1 à 7 ou 9 à 12, le bâtiment étant réalisé comme hôpital, **caractérisé en ce que** l'hôpital présente une zone de patients et une zone d'approvisionnement qui sont accessibles par des voies séparées, des véhicules automatisés accédant à la zone des patients en passant par la zone d'approvisionnement.

14. Bâtiment selon l'une des revendications précédentes 1 à 7 ou 9 à 13, le bâtiment étant réalisé comme hôpital, **caractérisé en ce que** l'hôpital présente une zone de patients et une zone d'approvisionnement qui sont accessibles par des voies séparées, l'accès à la zone des patients et la zone d'approvisionnement se faisant par des entrées séparées, **caractérisé en ce que** l'entrée à la zone des patients se trouve sur le devant et l'entrée à la zone d'approvisionnement se trouve à l'arrière du bâtiment.
